(19) Europäisches Patentamt
European Patent Office
Office européen des brevets

(11) **EP 3 940 254 B1**

(12) **EUROPEAN PATENT SPECIFICATION**

(45) Date of publication and mention of the grant of the patent:
**06.12.2023 Bulletin 2023/49**

(21) Application number: **20773439.3**

(22) Date of filing: **13.03.2020**

(51) International Patent Classification (IPC):
*F16C 32/04* (2006.01)    *F04D 27/00* (2006.01)
*F04D 29/058* (2006.01)    *F04D 17/10* (2006.01)
*F04D 25/06* (2006.01)    *F04D 29/051* (2006.01)
*G06N 3/04* (2023.01)    *G06N 3/08* (2023.01)
*G06N 5/00* (2023.01)    *G06N 20/10* (2019.01)
*G06N 20/20* (2019.01)    *G06N 3/084* (2023.01)
*G06N 5/01* (2023.01)

(52) Cooperative Patent Classification (CPC):
**F04D 17/10; F04D 25/06; F04D 27/001;**
**F04D 29/0513; F04D 29/058; F16C 32/0446;**
**F16C 32/0453; F16C 32/0457; G06N 3/084;**
**G06N 5/01; G06N 20/10; G06N 20/20;**
F16C 32/0468; F16C 32/047; G06N 3/044;    (Cont.)

(86) International application number:
**PCT/JP2020/011162**

(87) International publication number:
**WO 2020/189565 (24.09.2020 Gazette 2020/39)**

(54) **MACHINE-LEARNING DEVICE AND MAGNETIC BEARING DEVICE**

MASCHINENLERNVORRICHTUNG UND MAGNETISCHE LAGERVORRICHTUNG

DISPOSITIF D'APPRENTISSAGE AUTOMATIQUE ET DISPOSITIF DE PALIER MAGNÉTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.03.2019 JP 2019048948**

(43) Date of publication of application:
**19.01.2022 Bulletin 2022/03**

(73) Proprietor: **DAIKIN INDUSTRIES, LTD.**
**Osaka-Shi, Osaka 530-0001 (JP)**

(72) Inventors:
• **FUJIMOTO, Shunpei**
**Osaka-shi, Osaka 530-8323 (JP)**
• **SAKAWAKI, Atsushi**
**Osaka-shi, Osaka 530-8323 (JP)**
• **HIRATA, Kazuya**
**Osaka-shi, Osaka 530-8323 (JP)**
• **HIBINO, Hiroshi**
**Osaka-shi, Osaka 530-8323 (JP)**

(74) Representative: **Global IP Europe**
**Patentanwaltskanzlei**
**Pfarrstraße 14**
**80538 München (DE)**

(56) References cited:
WO-A1-2018/033945    CN-A- 103 631 137
JP-A- H0 699 373    JP-A- H09 191 683
JP-A- 2001 165 163    JP-A- 2001 165 163
JP-A- 2002 174 199    JP-A- 2018 005 739
US-B1- 6 323 614    US-B1- 6 965 181

EP 3 940 254 B1

(52) Cooperative Patent Classification (CPC): (Cont.)
    G06N 3/045; G06N 3/048

(52) Cooperative Patent Classification (CPC): (Cont.)
    G06N 3/045; G06N 3/048

**Description**

**TECHNICAL FIELD**

The present invention relates to a machine learning device and a magnetic bearing device including the same.

**BACKGROUND ART**

In the related art, there is known a magnetic bearing device that supports an object to be supported such as a shaft in a non-contact manner by using a resultant electromagnetic force of a plurality of electromagnets. PTL 1 (Japanese Unexamined Utility Model Registration Application Publication No. H04-040308) discloses a configuration in which a position of an object to be supported is detected by a sensor and electromagnetic forces of electromagnets are controlled on the basis of a detection signal to hold the position of the object to be supported at a predetermined position.

JP 2001 165163 A discloses a machine learning device configured to learn a control condition for a magnetic bearing device that comprises a magnetic bearing having a plurality of electromagnets configured to apply an electromagnetic force to a shaft, the machine learning device comprising: a learning unit; a state variable acquisition unit configured to acquire a state variable including at least one parameter correlating with a position of the shaft; and an evaluation data acquisition unit configured to acquire evaluation data including at least one parameter from among a measured value of the position of the shaft, a target value of the position of the shaft, and a parameter correlating with a deviation from the target value.

SUMMARY OF INVENTION

< Technical Problem >

There is an issue in that a product-to-product variation in magnetic bearing devices, a temporal change of magnetic bearing devices, and the like hinder appropriate control of a position of an object to be supported.

< Solution to Problem >

A machine learning device according to to claim 1 is provided that learns a control condition for a magnetic bearing device.

A machine learning device according to a second aspect is the machine learning device according to the precedent first aspect in which the state variable includes at least an output value of a displacement sensor that outputs a signal according to the position of the shaft. The learning unit learns, as the control condition, at least one of a voltage value of the electromagnets and a current value of the electromagnets.

A machine learning device according to a third aspect is the machine learning device according to the first aspect in which the state variable includes at least a current value and a voltage value of the electromagnets or a current value and a magnetic flux of the electromagnets. The learning unit learns, as the control condition, at least one of the voltage value of the electromagnets and the current value of the electromagnets.

A machine learning device according to a fourth aspect is the machine learning device according to the first aspect in which the state variable includes at least an output value of a displacement sensor that outputs a signal according to the position of the shaft. The evaluation data includes at least a true value of the position of the shaft. The learning unit learns, as the control condition, the position of the shaft.

A machine learning device according to a fifth aspect is the machine learning device according to the first aspect in which the state variable includes at least a current value and a voltage value of the electromagnets or a current value and a magnetic flux of the electromagnets. The evaluation data includes at least a true value of the position of the shaft. The learning unit learns, as the control condition, the position of the shaft.

A machine learning device according to a sixth aspect is the machine learning device according to the first aspect in which the state variable includes at least a detected value of the position of the shaft and a command value of the position of the shaft. The learning unit learns, as the control condition, at least one of a voltage value of the electromagnets and a current value of the electromagnets.

A machine learning device according to a seventh aspect is the machine learning device according to the second or third aspect in which the updating unit causes the learning unit to further perform learning so as to make a current value for driving the magnetic bearing less than or equal to a predetermined allowable value.

A machine learning device according to an eighth aspect is the machine learning device according to the second or third aspect in which the evaluation data further includes a parameter correlating with a temperature of an inverter that drives the magnetic bearing. The updating unit causes the learning unit to further perform learning so as to make the temperature of the inverter lower than or equal to a predetermined allowable value.

A machine learning device according to a ninth aspect is the machine learning device according to any one of the second, third, and sixth aspects in which the state variable further includes a detected current value of the electromagnets in a case where the magnetic bearing is driven by a voltage-type inverter, and further includes a detected voltage value of the electromagnets in a case where the magnetic bearing is driven by a current-type inverter.

A machine learning device according to a tenth aspect is the machine learning device according to the ninth aspect in which the updating unit causes the learning unit to further perform learning in order to reduce a value correlating with responsivity of control of the current value.

A machine learning device according to an eleventh aspect is the machine learning device according to any one of the second, third, and sixth aspects in which the state variable further includes a number of rotations of the shaft.

A machine learning device according to a twelfth aspect is the machine learning device according to any one of the second, third, and sixth aspects in which the state variable further includes at least one parameter correlating with an operation condition of a refrigeration apparatus. The refrigeration apparatus includes a refrigerant circuit in which a compressor driven by a motor, a condenser, an expansion mechanism, and an evaporator are coupled. The operation condition includes a range of a refrigerating capacity of the refrigeration apparatus and a range of a temperature of a medium that is for heat exchange with refrigerant circulating through the refrigerant circuit and that flows into the condenser.

A machine learning device according to a thirteenth aspect is the machine learning device according to the twelfth aspect in which the state variable further includes at least one parameter correlating with the electromagnetic force applied to the shaft. The parameter correlating with the electromagnetic force includes at least one of a parameter correlating with a refrigerant load of the refrigeration apparatus and a parameter correlating with a physical characteristic of the refrigeration apparatus.

A machine learning device according to a fourteenth aspect is the machine learning device according to the twelfth aspect in which the state variable further includes at least one parameter correlating with a characteristic of the magnetic bearing. The parameter correlating with the characteristic of the magnetic bearing includes at least one of a parameter correlating with an inductance of coils of the electromagnets and a parameter correlating with a resistance of the coils of the electromagnets.

A machine learning device according to a fifteenth aspect is the machine learning device according to the second or third aspect in which the evaluation data further includes a parameter correlating with power consumption of the magnetic bearing. The updating unit causes the learning unit to further perform learning in order to reduce the power consumption. The parameter correlating with the power consumption includes at least two of a current value for driving the magnetic bearing, a voltage value for driving the magnetic bearing, and a resistance of coils of the electromagnets.

A machine learning device according to a sixteenth aspect is the machine learning device according to any one of the seventh, eighth, and fifteenth aspects in which the state variable further includes at least one parameter correlating with an operation condition of a refrigeration apparatus. The refrigeration apparatus includes a refrigerant circuit in which a compressor driven by a motor, a condenser, an expansion mechanism, and an evaporator are coupled. The operation condition includes a range of a refrigerating capacity of the refrigeration apparatus and a range of a temperature of a medium that is for heat exchange with refrigerant circulating through the refrigerant circuit and that flows into the condenser.

A machine learning device according to a seventeenth aspect is the machine learning device according to any one of the second, third, and sixth aspects in which the evaluation data further includes at least one parameter correlating with input energy supplied to the compressor driven by the motor. The updating unit causes the learning unit to further perform learning in order to reduce the input energy.

A machine learning device according to an eighteenth aspect is the machine learning device according to the seventeenth aspect in which the state variable further includes at least one of at least one parameter correlating with an operation condition of a refrigeration apparatus and at least one parameter correlating with adiabatic efficiency of an impeller coupled to the shaft. The refrigeration apparatus includes a refrigerant circuit in which the compressor driven by the motor, a condenser, an expansion mechanism, and an evaporator are coupled. The operation condition includes a range of a refrigerating capacity of the refrigeration apparatus and a range of a temperature of a medium that is for heat exchange with refrigerant circulating through the refrigerant circuit and that flows into the condenser. The parameter correlating with the adiabatic efficiency of the impeller includes at least one of a parameter correlating with a pressure of the refrigerant and a parameter correlating with a temperature of the refrigerant.

A machine learning device according to a nineteenth aspect is the machine learning device according to the second or fourth aspect in which the state variable further includes a parameter correlating with a temperature of the displacement sensor.

A machine learning device according to a twentieth aspect is the machine learning device according to any one of the first to nineteenth aspects in which the updating unit calculates a reward, based on the evaluation data. The learning unit performs learning by using the reward.

A machine learning device according to a twenty-first aspect is the machine learning device according to any one of the first to nineteenth aspects in which the learning unit changes a parameter of a function in accordance with the output of the updating unit a plurality of number of times and outputs, for each function whose parameter is changed, the control condition from the state variable. The updating unit includes an accumulation unit and an assessment unit. The assessment unit assesses the evaluation data and outputs an assessment result. The accumulation unit creates, based on the assessment result, training data from the state variable and the evaluation data and accumulates the training data. The learning unit performs learning, based on the training data accumulated in the accumulation unit.

A machine learning device according to a twenty-second aspect is the machine learning device according to any one of the first to twenty-first aspects in which the learning unit outputs the control condition, based on a trained model obtained as a result of learning.

A magnetic bearing device according to a twenty-third aspect includes the machine learning device according to the twenty-second aspect.

## BRIEF DESCRIPTION OF DRAWINGS

[Fig. 1] Fig. 1 is an overall configuration diagram of an air conditioner 100 including a magnetic bearing device 10 according to a first embodiment.
[Fig. 2] Fig. 2 is a longitudinal sectional view of a compressor 110.
[Fig. 3] Fig. 3 is a cross-sectional view of a radial magnetic bearing 21.
[Fig. 4] Fig. 4 is a longitudinal sectional view of the radial magnetic bearing 21.
[Fig. 5] Fig. 5 is a plan view of a thrust magnetic bearing 22.
[Fig. 6] Fig. 6 is a longitudinal sectional view of the thrust magnetic bearing 22.
[Fig. 7] Fig. 7 is a reference diagram for comparison and is a block configuration diagram of a position control system for a shaft 115.
[Fig. 8] Fig. 8 is a block configuration diagram of a position control system for the shaft 115 according to the invention.
[Fig. 9A] Fig. 9A is a block configuration diagram of a control unit 40 that performs supervised learning.
[Fig. 9B] Fig. 9B is a block configuration diagram of the control unit 40 that performs supervised learning.
[Fig. 10] Fig. 10 is a schematic diagram of a model of a neuron in a neural network.
[Fig. 11] Fig. 11 is a schematic diagram of a three-layer neural network configured by combining the neurons illustrated in Fig. 10.
[Fig. 12] Fig. 12 is a diagram for describing a support vector machine, and illustrates a feature space in which pieces of learning data of two classes are linearly separable.
[Fig. 13] Fig. 13 illustrates a feature space in which pieces of learning data of two classes are linearly inseparable.
[Fig. 14] Fig. 14 is an example of a decision tree configured in accordance with a divide and conquer algorithm.
[Fig. 15] Fig. 15 illustrates a feature space divided in accordance with the decision tree of Fig. 14.
[Fig. 16] Fig. 16 is a block configuration diagram of the control unit 40 that performs reinforcement learning based on Q-learning.
[Fig. 17] Fig. 17 is a block configuration diagram of a position control system for the shaft 115 in a third embodiment.
[Fig. 18] Fig. 18 is a block configuration diagram of a position control system for the shaft 115 in a fourth embodiment.
[Fig. 19] Fig. 19 is a block configuration diagram of a position control system for the shaft 115 in a fifth embodiment.
[Fig. 20] Fig. 20 is an example of operation conditions of the air conditioner 100 in a modification F.

## DESCRIPTION OF EMBODIMENTS

< First Embodiment >

An air conditioner 100 including a magnetic bearing device 10 according to a first embodiment will be described with reference to the drawings.

(1) Overall Configuration of Air Conditioner 100

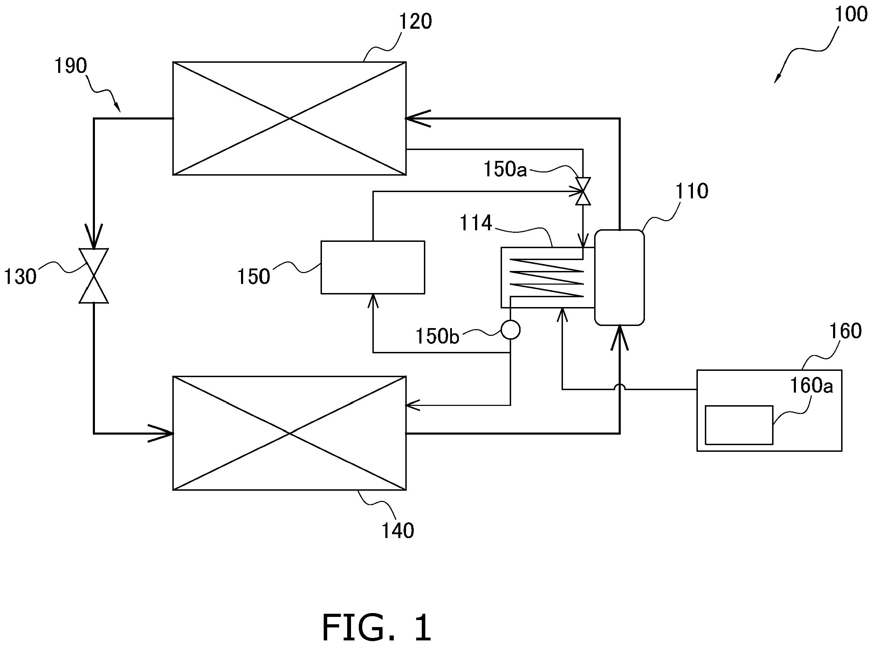

Fig. 1 is an overall configuration diagram of the air conditioner 100. The air conditioner 100 includes a refrigerant circuit 190. The refrigerant circuit 190 is a closed circuit filled with refrigerant. A compressor 110, a condenser 120, an expansion valve 130, an evaporator 140, and a motor cooling control device 150 are provided in the refrigerant circuit 190. Various compressors can be adopted as the compressor 110. In the present embodiment, the compressor 110 is a turbo compressor. The compressor 110 is driven by a motor 114. The motor 114 is supplied with power by a motor control device 160.

The condenser 120 and the evaporator 140 are water-refrigerant heat exchangers. The expansion valve 130 is, for example, an electronic expansion valve. A sensor that detects a pressure of the refrigerant, a sensor that detects a temperature of the refrigerant, etc. are provided in the refrigerant circuit 190.

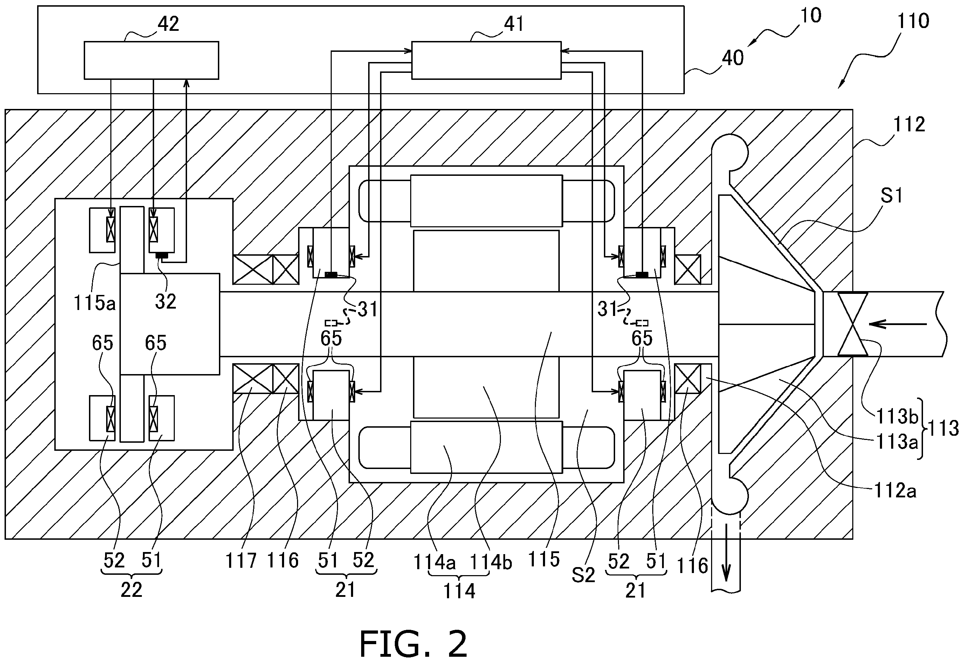

Fig. 2 is a longitudinal sectional view of the compressor 110. The compressor 110 mainly includes a casing 112, a compression mechanism 113, the motor 114, a shaft 115, a radial touchdown bearing 116, a thrust touchdown bearing 117, and the magnetic bearing device 10.

The casing 112 has a cylindrical shape with both ends thereof closed. The casing 112 is disposed such that a cylinder axis of the cylindrical shape is parallel to a horizontal direction. A space inside the casing 112 is partitioned by a wall portion 112a. A space on the right side of the wall portion 112a in Fig. 2 is a compression mechanism space S1 in which the compression mechanism 113 is housed. A space on the left side of the wall portion 112a in Fig. 2 is a motor space S2 in which the motor 114 is housed. The shaft 115 that extends in the horizontal direction is disposed in the space inside the casing 112. The shaft 115 couples the compression mechanism 113 and the motor 114 to each other.

The compression mechanism 113 compresses a fluid. In the present embodiment, the fluid refers to the refrigerant with which the refrigerant circuit 190 is filled. The compression mechanism 113 mainly includes an impeller 113a and an inlet guide vane 113b. The impeller 113a is constituted by a plurality of blades to have a substantially circular conic external shape. The impeller 113a is fixed to one of ends of the shaft 115. The inlet guide vane 113b is provided at a fluid inlet of the compression mechanism 113. The inlet guide vane 113b is a valve for controlling an amount of suctioned fluid.

The motor 114 drives the shaft 115 to rotate. The motor 114 mainly includes a stator 114a and a rotor 114b. The stator 114a is formed to have a cylindrical shape and is fixed inside the casing 112. The rotor 114b is formed to have a columnar shape and is installed inside the stator 114a to be able to rotate. A shaft hole in which the shaft 115 is fixed is formed at a central portion of the rotor 114b. A disk member 115a is fixed to an end of the shaft 115. The disk member 115a is fixed to an end to which the impeller 113a is not fixed.

The motor control device 160 controls power supplied to the motor 114 to start and stop the motor 114 and control a rotational speed. The motor control device 160 mainly includes a converter circuit, an inverter circuit, and a microcomputer. These are mounted on a control board 160a. The microcomputer controls a switching operation of a switching element included in the inverter circuit. Thus, information such as the rotational speed of the motor 114 and a current value of the motor 114 is input to the microcomputer. A temperature sensor is provided on the control board 160a for the purpose of protecting the switching element. When controlling the inverter circuit, the microcomputer uses a detected value obtained by the temperature sensor.

The compressor 110 causes the refrigerant in the condenser 120 to flow inside the motor 114 to cool the motor 114. The motor cooling control device 150 includes an electrical valve 150a and a temperature sensor 150b. The motor cooling control device 150 controls the valve 150a in accordance with a detected value obtained by the temperature sensor 150b to control a flow rate of the refrigerant that flows into the motor 114 from the condenser 120. Consequently, the temperature of the motor 114 can be maintained within a predetermined temperature range in the refrigerant circuit 190. The motor 114 is coupled to the condenser 120 by a pipe with the valve 150a therebetween. The motor 114 is also coupled to the evaporator 140 by a pipe. The refrigerant that has flowed inside the motor 114 and has cooled the motor 114 returns to the evaporator 140. The temperature sensor 150b is attached to the pipe that couples the motor 114 and the evaporator 140 to each other.

The compressor 110 includes two kinds of touchdown bearings which are the radial touchdown bearing 116 and the thrust touchdown bearing 117. The radial touchdown bearing 116 supports the shaft 115 when the magnetic bearing device 10 is in non-conduction, that is, when the shaft 115 is not magnetically levitated.

(2) Detailed Configuration of Magnetic Bearing Device 10

The magnetic bearing device 10 magnetically levitates the shaft 115, which is an object to be supported, to support the shaft 115 in a non-contact manner so that the shaft 115 can rotate. The magnetic bearing device 10 mainly includes one or a plurality of (three in the present embodiment) magnetic bearings 21 and 22, one or a plurality of (five in the present embodiment) displacement sensors 31 and 32, and a control unit 40.

(2-1) Magnetic Bearings 21 and 22

The magnetic bearings 21 and 22 each include a pair of electromagnets that are opposite each other with the object to be supported interposed therebetween. The magnetic bearings 21 and 22 are configured to support the object to be supported by a resultant electromagnetic force of the pairs of electromagnets in a non-contact manner. The magnetic bearings 21 and 22 each control currents that flow through the pair of electromagnets to control a resultant electromagnetic force of the pair of electromagnets, and thereby can control the position of the object to be supported in a direction in which the pair of electromagnets are opposite each other. In the present embodiment, the magnetic bearing device 10 includes two radial magnetic bearings 21 and one thrust magnetic bearing 22 as the magnetic bearings 21 and 22.

(2-1-1) Radial Magnetic Bearing 21

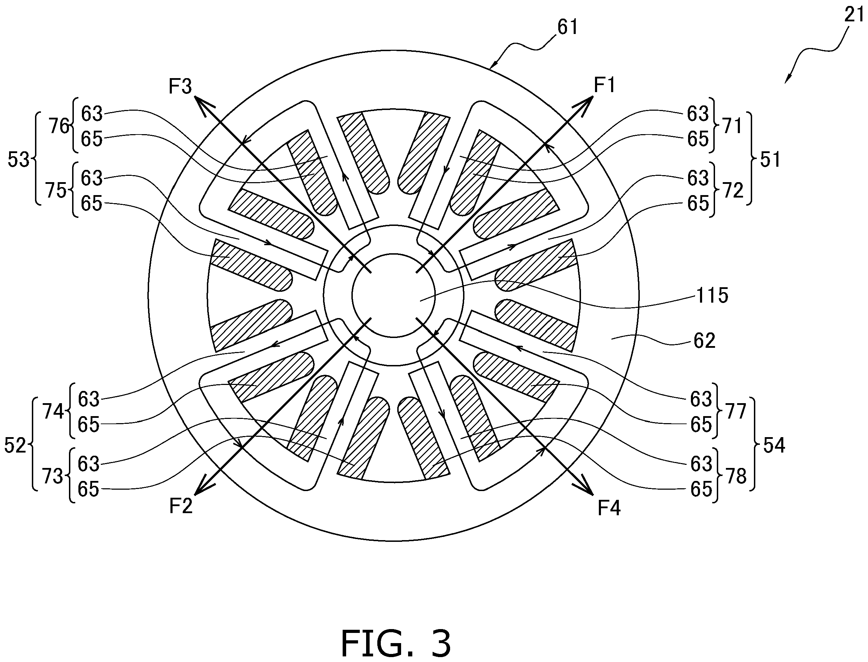

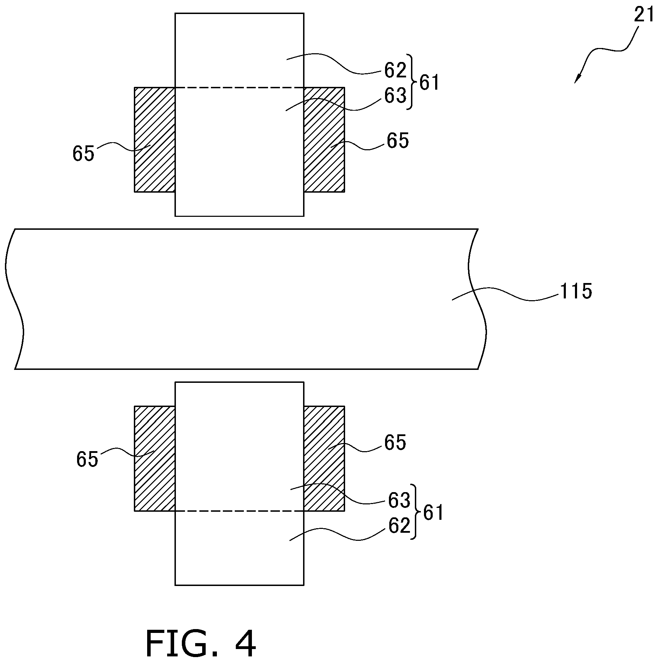

Fig. 3 is a cross-sectional view of the radial magnetic bearing 21. Fig. 4 is a longitudinal sectional view of the radial magnetic bearing 21. As illustrated in Figs. 3 and 4, the radial magnetic bearing 21 includes a first electromagnet 51 to a fourth electromagnet 54 to be configured as a heteropolar radial magnetic bearing. The first electromagnet 51 and the second electromagnet 52 are opposite each other with the shaft 115 interposed between. The shaft 115 is supported in a non-contact manner by an electromagnetic force F1 of the first electromagnet 51 and an electromagnetic force F2 of the second electromagnet 52. The third electromagnet 53 and the fourth electromagnet 54 are opposite each other with the shaft 115 interposed between. The shaft 115 is supported in a non-contact manner by an electromagnetic force F3 of the third electromagnet 53 and an electromagnetic force F4 of the fourth electromagnet 54. A direction in which the third electromagnet 53 and the fourth electromagnet 54 are opposite each other is orthogonal to a direction in which the first electromagnet 51 and the second electromagnet 52 are opposite each other in planar view.

In Fig. 3, the radial magnetic bearing 21 includes a magnetic bearing core 61 and eight coils 65. The magnetic bearing core 61 is constituted by, for example, a stack of a plurality of electromagnetic steel sheets and has a back yoke 62 and eight teeth 63. The back yoke 62 is formed to have a cylindrical shape. The eight teeth 63 are arranged at a predetermined interval (an interval of 45° in the present embodiment) in a circumferential direction along an inner circumferential surface of the back yoke 62. The teeth 63 protrude inward in a radial direction from the inner circumferential surface of the back yoke 62. An inner circumferential surface (tip surface) of the teeth 63 is opposite an outer circumferential surface of the shaft 115 with a predetermined gap therebetween.

Each of the eight coils 65 is wound around a corresponding one of the eight teeth 63 of the magnetic bearing core 61. In this manner, eight electromagnet portions 71 to 78 are formed. In Fig. 3, the first electromagnet portion 71, the second electromagnet portion 72, the seventh electromagnet portion 77, the eighth electromagnet portion 78, the third electromagnet portion 73, the fourth electromagnet portion 74, the fifth electromagnet portion 75, and the sixth electromagnet portion 76 are sequentially arranged in a clockwise direction. The first electromagnet 51 includes the first electromagnet portion 71 and the second electromagnet portion 72. The second electromagnet 52 includes the third electromagnet portion 73 and the fourth electromagnet portion 74. The third electromagnet 53 includes the fifth electromagnet portion 75 and the sixth electromagnet portion 76. The fourth electromagnet 54 includes the seventh electromagnet portion 77 and the eighth electromagnet portion 78. The position of the shaft 115 in the direction in which the first electromagnet 51 and the second electromagnet 52 are opposite each other and in the direction in which the third electromagnet 53 and the fourth electromagnet 54 are opposite each other can be controlled by controlling currents that flow through the eight electromagnet portions 71 to 78 and thereby controlling a resultant electromagnetic force that is a resultant force of the electromagnetic forces F1 to F4 of the first to fourth electromagnets 51 to 54.

The winding directions of the coils 65 and the directions of the currents that flow through the coils 65 are set such that attractive forces are generated in the first to fourth electromagnets 51 to 54. In this case, the attractive forces refer to electromagnetic forces that work in a direction for attracting the shaft 115. Specifically, the winding directions of the coils 65 and the directions of the currents that flow through the coils 65 are set such that magnetic fluxes are generated in directions of loop-like arrows illustrated in Fig. 3.

(2-1-2) Thrust Magnetic Bearing 22

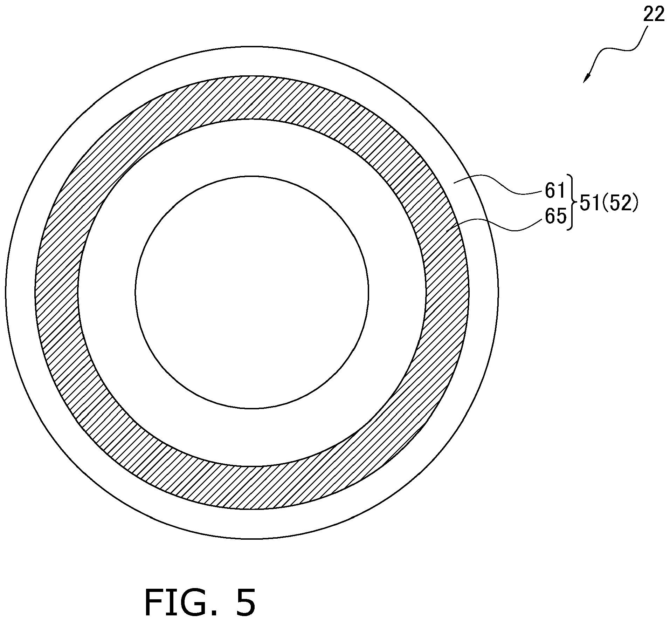

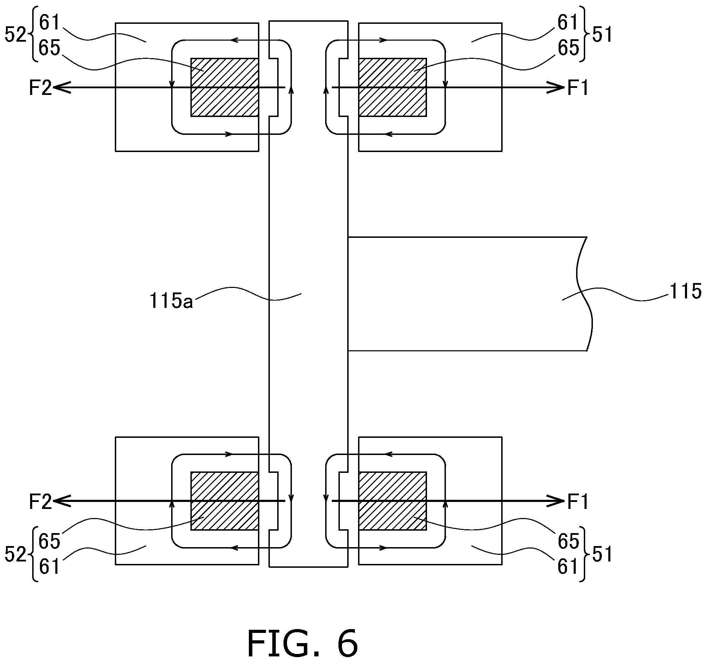

Fig. 5 is a plan view of the thrust magnetic bearing 22. Fig. 6 is a longitudinal sectional view of the thrust magnetic bearing 22. As illustrated in Figs. 5 and 6, the thrust magnetic bearing 22 includes the first electromagnet 51 and the second electromagnet 52. The first electromagnet 51 and the second electromagnet 52 are opposite each other with the disk member 115a interposed therebetween in the horizontal direction. The disk member 115a is supported in a non-contact manner by the electromagnetic force F1 of the first electromagnet 51 and the electromagnetic force F2 of the second electromagnet 52.

Specifically, the thrust magnetic bearing 22 includes two magnetic bearing cores 61 and two coils 65. The two magnetic bearing cores 61 are each formed to have a cyclic shape and are disposed on respective sides of the disk member 115a in an axial direction with a predetermined gap therebetween. Circular grooves are formed on opposite surfaces of the magnetic bearing cores 61 for the entire perimeter. Each of the two coils 65 is housed in a corresponding one of the circular grooves of the two magnetic bearing cores 61. In this manner, the first electromagnet 51 and the second electromagnet 52 are configured. The position of the disk member 115a (the position of the shaft 115) in the direction in which the first electromagnet 51 and the second electromagnet 52 are opposite each other (the horizontal direction) can be controlled by controlling currents that flow through the first electromagnet 51 and the second electromagnet 52 and thereby controlling the resultant electromagnetic force that is a resultant force of the electromagnetic force F1 of the first electromagnet 51 and the electromagnetic force F2 of the second electromagnet 52.

The winding directions of the coils 65 and the directions of the currents that flow through the coils 65 are set such that attractive forces are generated in the first electromagnet 51 and the second electromagnet 52. In this case, the attractive forces refer to electromagnetic forces that work in a direction for attracting the disk member 115a. Specifically, the winding directions of the coils 65 and the directions of the currents that flow through the coils 65 are set such that magnetic fluxes are generated in directions of loop-like arrows illustrated in Fig. 6.

(2-2) Displacement Sensors 31 and 32

Each of the displacement sensors 31 and 32 is an eddy-current-type displacement sensor. Each of the displacement sensors 31 and 32 is provided to correspond to a pair of electromagnets (a pair of the first electromagnet 51 and the second electromagnet 52) that are opposite each other with an object to be supported interposed therebetween. The displacement sensors 31 and 32 detect an amount of displacement of the object to be supported from reference positions of the displacement sensors 31 and 32. The reference positions of the displacement sensors 31 and 32 are, for example, positions of sensor heads of the displacement sensors 31 and 32 or a center position in the direction in which the pair of electromagnets are opposite each other. The center position in the direction in which the pair of electromagnets are opposite each other is, for example, a center position between the first electromagnet 51 and the second electromagnet 52. In the present embodiment, the magnetic bearing device 10 includes radial displacement sensors 31 and a thrust displacement sensor 32 as the displacement sensors 31 and 32.

(2-2-1) Radial Displacement Sensor 31

Two radial displacement sensors 31 are provided for each of the radial magnetic bearings 21. That is, the magnetic bearing device 10 includes four radial displacement sensors 31. The radial displacement sensor 31 detects an amount of displacement from the reference position of the radial displacement sensor 31. The reference position of the radial displacement sensor 31 is, for example, a position of the sensor head of the radial displacement sensor 31 or the center position of the shaft 115. At each of the radial magnetic bearings 21, one of the radial displacement sensors 31 detects an amount of displacement in the direction (X-axis direction) in which the first electromagnet 51 and the second electromagnet 52 of the radial magnetic bearing 21 are opposite each other. The X-axis direction is a radial direction of the radial magnetic bearing 21. The other radial displacement sensor 31 detects an amount of displacement in the direction (Y-axis direction) in which the third electromagnet 53 and the fourth electromagnet 54 of the radial magnetic bearing 21 are opposite each other. The Y-axis direction is a radial direction of the radial magnetic bearing 21 that is orthogonal to the X-axis direction.

The radial displacement sensor 31 detects an amount of displacement from the reference position of the radial displacement sensor 31 at a predetermined time interval. The predetermined time interval is, for example, 40 $\mu$s.

(2-2-2) Thrust Displacement Sensor 32

The magnetic bearing device 10 includes one thrust displacement sensor 32. The thrust displacement sensor 32 detects an amount of displacement in the direction (Z-axis direction) in which the first electromagnet 51 and the second electromagnet 52 of the thrust magnetic bearing 22 are opposite each other. The Z-axis direction is a direction along an axis of the shaft 115. The thrust displacement sensor 32 detects an amount of displacement from the reference position of the thrust displacement sensor 32. The reference position of the thrust displacement sensor 32 is, for example, a position of the sensor head of the thrust displacement sensor 32 or the center position of the disk member 115a.

The thrust displacement sensor 32 detects an amount of displacement from the reference position of the thrust displacement sensor 32 at a predetermined time interval. The predetermined time interval is, for example, 40 $\mu$s.

(2-3) Control Unit 40

The control unit 40 controls the one or a plurality of magnetic bearings 21 and 22 such that the object to be supported (the shaft 115 and the disk member 115a) is supported in a non-contact manner. The control unit 40 controls levitation of the object to be supported, by controlling electromagnetic forces of the respective magnetic bearings 21 and 22. Specifically, the control unit 40 is constituted by a microcomputer and a memory device or the like that stores software for causing the microcomputer to operate. The control unit 40 includes a radial control unit 41 and a thrust control unit 42.

(2-3-1) Radial Control Unit 41

The radial control unit 41 controls levitation of the shaft 115 by using the two radial magnetic bearings 21. In this levitation control, the radial control unit 41 controls the position of the shaft 115 in each of the X-axis direction and the Y-axis direction. Specifically, on the basis of the amounts of displacement detected by the radial displacement sensors 31 in each direction of the X-axis direction and the Y-axis direction, the radial control unit 41 causes currents (control currents) to flow through the coils 65 that constitute the first to fourth electromagnets 51 to 54 of the radial magnetic bearings 21 such that a difference value between the position of the shaft 115 and a predetermined position command value converges to zero. The radial control unit 41 outputs voltages (voltage command values) to be applied to the respective coils 65 such that the control currents flow through the respective coils 65.

(2-3-2) Thrust Control Unit 42

The thrust control unit 42 controls levitation of the disk members 115a by using the thrust magnetic bearing 22. In this levitation control, the thrust control unit 42 controls the position of the disk member 115a in the Z-axis direction. Specifically, on the basis of the amount of displacement detected by the thrust displacement sensor 32 in the Z-axis direction, the thrust control unit 42 causes currents (control currents) to flow through the coils 65 that constitute the first and second electromagnets 51 and 52 of the thrust magnetic bearing 22 such that a difference value between the position of the disk member 115a and a predetermined position command value converges to zero. The thrust control unit 42 outputs voltages (voltage command values) to be applied to the respective coils 65 such that the control currents flow through the respective coils 65.

(2-4) Position Control System of Magnetic Bearing Device 10

The magnetic bearing device 10 includes a position control system for the shaft 115. In the position control system, the control unit 40 controls the position of the shaft 115 supported in a non-conduct manner, by controlling electromagnetic forces of the respective magnetic bearings 21 and 22.

A technique in which the control unit 40 (the radial control unit 41 and the thrust control unit 42) controls electromagnetic forces of the two radial magnetic bearings 21 and the one thrust magnetic bearing 22 to control the position of the shaft 115 will be described next. In the control of the position of the shaft 115, the position of the shaft 115 is controlled such that the axis of the shaft 115 is located at the center of a movable limit area of the shaft 115 in an X-Y plane including the X axis and the Y axis when the shaft 115 is viewed along the Z axis. The movable limit area of the shaft 115 is an area on the inner side of the position where the shaft 115 touches the radial touchdown bearing 116. Specifically, for example, the movable limit area of the shaft 115 is a circular area having a radius of 250 $\mu$m. When the shaft 115 rotates, the shaft 115 swings in a range of 10 $\mu$m or less from the axis thereof, for example. An allowable movable area of the shaft 115 is, for example, a circular area having a radius of 83 $\mu$m. The allowable movable area of the shaft 115 is a range in which the shaft 115 is allowed to swing apart from the axis thereof when the shaft 115 rotates.

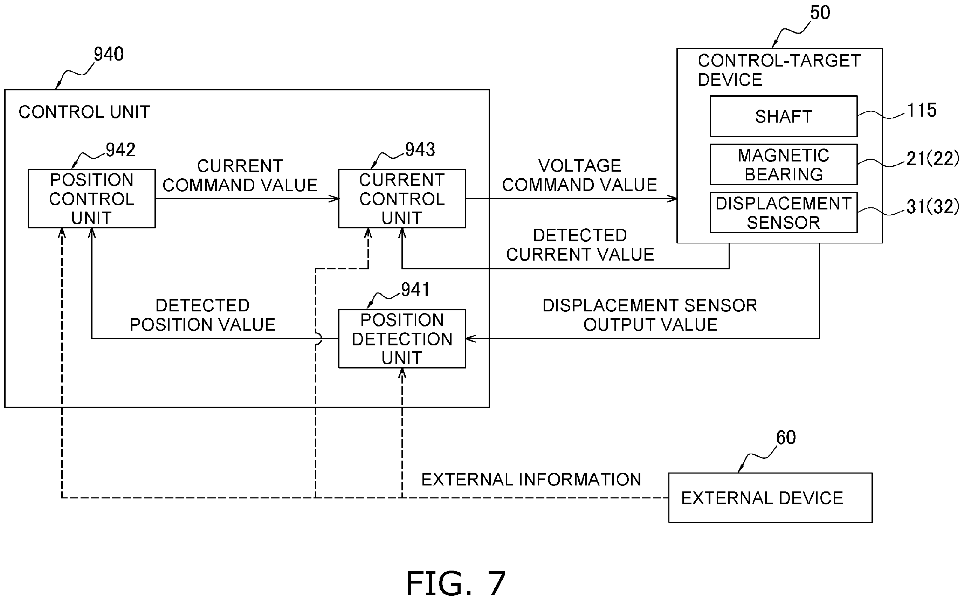

In the present embodiment, the control unit 40 controls the position of the shaft 115 by using a machine learning technique. Now, an operation of a control unit of the related art that does not use a machine learning technique will be described for comparison. Fig. 7 is a reference diagram for comparison and is a block configuration diagram of a position control system, for the shaft 115, including a control unit 940 of the related art. The control unit 940 mainly includes a position detection unit 941, a position control unit 942, and a current control unit 943. Fig. 7 illustrates a control-target device 50 and an external device 60. The control-target device 50 and the external device 60 transmit information to and receive information from the control unit 940. The control-target device 50 is a device included in the magnetic bearing device 10 and is, specifically, the shaft 115, the magnetic bearings 21 and 22, and the displacement sensors 31 and 32. The external device 60 is a device that is other than the magnetic bearing device 10 and is included in the air conditioner 100. The external device 60 is, for example, the motor cooling control device 150.

The position detection unit 941 detects a position of the shaft 115 in the X-Y plane. The position detection unit 941 receives output values of the displacement sensors 31 and 32. The output values of the displacement sensors 31 and 32 include the position of the shaft 115 in the X-axis direction and the position of the shaft 115 in the Y-axis direction. The position detection unit 941 receives information regarding the operation of the air conditioner 100 from the external device 60. On the basis of the output values received from the displacement sensors 31 and 32 and the information (external information) received from the external device 60, the position detection unit 941 outputs a detected position value that is information regarding the position of the shaft 115.

On the basis of the information regarding the position of the shaft 115 detected by the position detection unit 941 and the external information, the position control unit 942 outputs current command values in accordance with a predetermined control rule such that the shaft 115 rotates within the allowable movable area. The current command values indicate currents to be input to the coils 65 of the electromagnets of the magnetic bearings 21 and 22.

On the basis of the current command values output by the position control unit 942, the detected values of the currents flowing through the coils 65 of the magnetic bearings 21 and 22, and the external information, the current control unit 943 outputs voltage command values to be applied to the coils 65 of the magnetic bearings 21 and 22. The voltage command values indicate voltages to be applied to the coils 65 of the magnetic bearings 21 and 22.

On the basis of the output values of the control-target device 50 and the external device 60, the control unit 940 outputs voltage command values in accordance with a predetermined control rule such that the shaft 115 rotates within the allowable movable area.

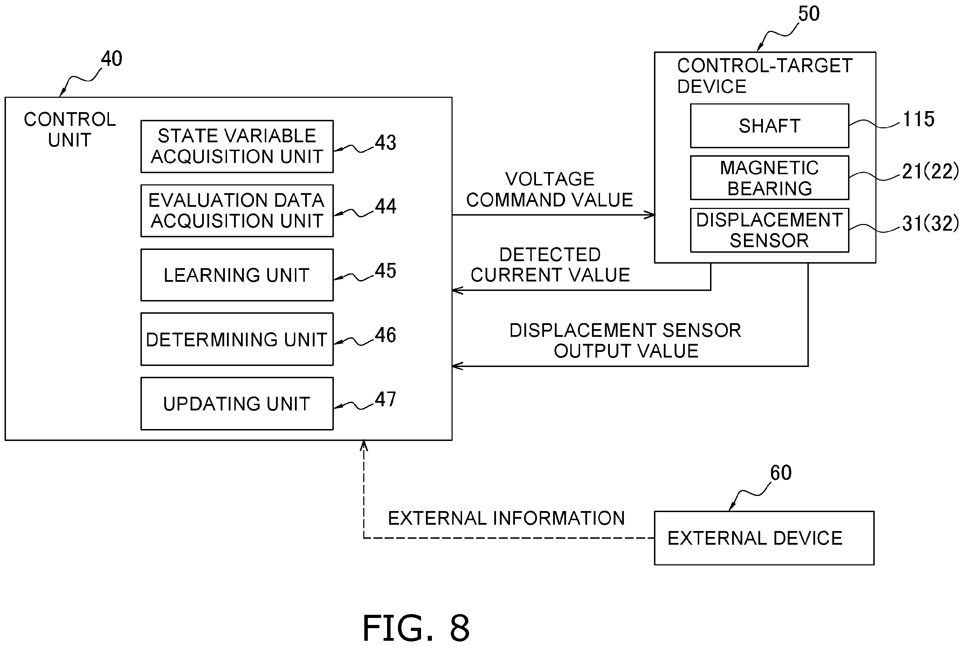

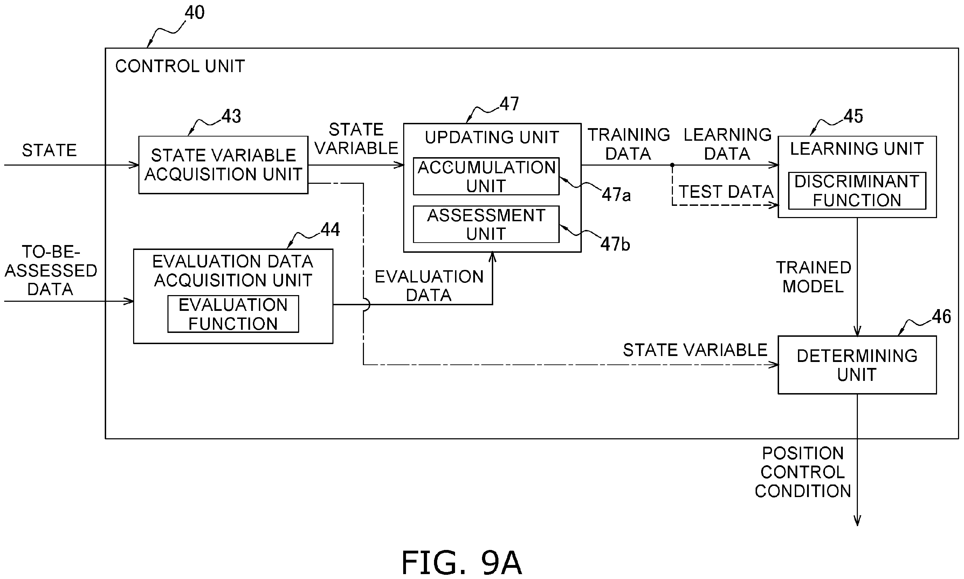

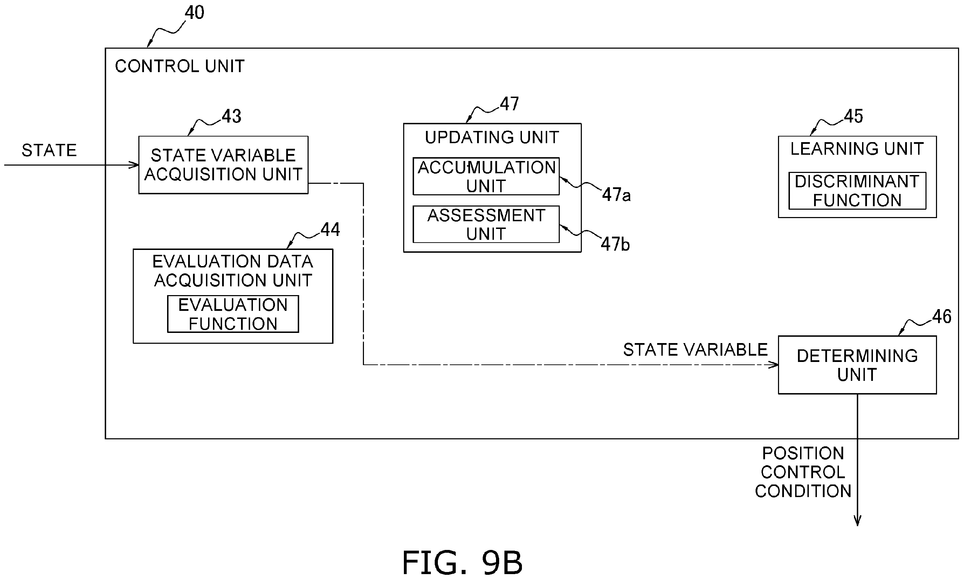

Control of the position of the shaft 115 performed by the control unit 40 according to the embodiment of the present invention will be described next. Fig. 8 is a block configuration diagram of a position control system, for the shaft 115, including the control unit 40 according to the present embodiment. The control unit 40 has a function as a machine learning device that learns a control condition for the magnetic bearing device 10. Specifically, the control unit 40 controls the position of the shaft 115 by using a machine learning technique. More specifically, the control unit 40 learns a condition (position control condition) for appropriately controlling the position of the shaft 115 by using the output values of the control-target device 50 and by using a technique of supervised learning or reinforcement learning. In the present embodiment, the control-target device 50 is at least one of the shaft 115, the magnetic bearings 21 and 22, and the displacement sensors 31 and 32. The control unit 40 determines an optimum position control condition for a new output value by using the learning result of the position control condition. The control unit 40 mainly includes a state variable acquisition unit 43, an evaluation data acquisition unit 44, a learning unit 45, a determining unit 46, and an updating unit 47. Figs. 9A and 9B are block configuration diagrams of the control unit 40 that performs supervised learning.

(2-4-1) State Variable Acquisition Unit 43

The state variable acquisition unit 43 observes the state of the magnetic bearing device 10 while the magnetic bearing device 10 is in operation and acquires information regarding the observed state as a state variable. That is, the state variable acquisition unit 43 receives the state of the magnetic bearing device 10 and outputs the state variable. The state variable includes at least one parameter correlating with the position of the shaft 115. In the present embodiment, the state variable is the output values of the displacement sensors 31 and 32. The state variable is used as training data in supervised learning.

Here, the position of the shaft 115 refers to at least one of coordinate values that restrict five degrees of freedom except for an angle about the axis (Z-axis) of the shaft 115. In one example, the five degrees of freedom are coordinate values of the position of the center of gravity of the shaft 115 in the X-axis direction, the Y-axis direction, and the Z-axis direction, an angle of the shaft 115 about the X-axis, and an angle of the shaft 115 about the Y-axis. In another example, the five degree of freedom are coordinate values of the two radial magnetic bearings 21 in the X-axis direction and the Y-axis direction and coordinate values of the center of gravity of the two radial magnetic bearings 21 in the Z-axis direction. In a specific example, the position of the center of gravity of the shaft 115 in the X-Y plane may be used as the position of the shaft 115.

(2-4-2) Evaluation Data Acquisition Unit 44

The evaluation data acquisition unit 44 evaluates to-be-assessed data and acquires evaluation data. The evaluation data is used as training data in supervised learning. The evaluation data includes at least one parameter from among a measured value of the position of the shaft 115, a target value of the position of the shaft 115, and a parameter correlating with a deviation of the position of the shaft 115 from the target value. For example, the evaluation data acquisition unit 44 inputs to-be-assessed data to a predetermined evaluation function and acquires an output value of the evaluation function as the evaluation data. That is, the evaluation data acquisition unit 44 receives the to-be-assessed data and outputs the evaluation data. The to-be-assessed data is, for example, data that is usable in evaluation of the control of the position of the shaft 115. In the present embodiment, the to-be-assessed data represents the center position (position command value) of the movable range of the shaft 115 and the detected value (detected position value) of the position of the shaft 115. According to the invention the position command value is a target value of the position of the shaft 115. The detected position value is, for example, a detected value of the position of the shaft 115, which is obtained from the output values of the displacement sensors 31 and 32.

In this case, the control unit 40 controls the position of the shaft 115 such that the detected position value approaches the position command value as much as possible. Thus, according to the invention the evaluation data acquisition unit 44 uses the to-be-assessed data to acquire, as the evaluation data, a deviation (shaft position deviation) of the detected position value relative to the position command value. It is more preferable that the shaft position deviation is closer to zero. In this case, the input values of the evaluation function are the position command value and the detected position value, and the output value of the evaluation function is the shaft position deviation.

The evaluation function may be a function that regards the shaft position deviation in a predetermined range as a constant value. The predetermined range is a range near zero, and the constant value is zero. That is, from the perspective of controlling the position of the shaft 115, the shaft position deviation just needs to be near zero and need not converge at zero.

The shaft position deviation is, for example, an absolute value of a distance between the position command value and the detected position value. However, the shaft position deviation may be a root mean square (RMS) or mean square (MS) of the distance from the present time point to a predetermined past time point, or may be an overshoot amount or setting time of the distance in the case where a disturbance is forcibly added. The overshoot amount is an excess from the position command value in the case where the detected position value exceeds (overshoots) the position command value in the process of the detected position value approaching the position command value. The setting time is a time up to a time point at which the detected position value enters a predetermined allowable range near the position command value and no longer exits from the allowable range thereafter in the process of the detected position value approaching the position command value.

(2-4-3) Learning Unit 45

The learning unit 45 learns a condition (position control condition) for appropriately controlling the position of the shaft 115 by using a technique of supervised learning or reinforcement learning. The learning unit 45 learns the position control condition in accordance with an output of the updating unit 47. An operation of the learning unit 45 in the case of using supervised learning will be described next.

The learning unit 45 uses, as learning data, a pair of the state variable acquired by the state variable acquisition unit 43 in advance and the evaluation data acquired by the evaluation data acquisition unit 44 in advance. In the present embodiment, the state variable is the output values of the displacement sensors 31 and 32, and the evaluation data is the shaft position deviation. The training data used by the learning unit 45 in learning is a pair of a state variable and evaluation data.

The learning unit 45 learns the position control condition by adjusting parameters of a discriminant function, which is a mapping from the state variable to the evaluation data, in accordance with the output of the updating unit 47. The purpose of learning performed by the learning unit 45 is to adjust parameters of the discriminant function by using learning data so that correct or appropriate evaluation data can be obtained from a new state variable. The discriminant function whose parameters are sufficiently adjusted by the learning unit 45 corresponds to a trained model.

As illustrated in Fig. 9A, the learning unit 45 may adjust the parameters of the discriminant function by using part of the training data as the learning data and may use the rest as test data. The test data refers to data that is not used in learning and is used for evaluation of the performance of the trained model. By using the test data, the accuracy of the evaluation data obtained from a new state variable can be predicted in a form of an error probability for the test data. As techniques for splitting data acquired in advance into learning data and test data, hold-out, cross-validation, leave one out (jackknife), bootstrapping, and the like are used.

In addition, learning performed by the learning unit 45 is classified into online learning and batch learning depending on a model updating timing. The online learning is a technique for updating an existing model by using only newly acquired data every time data necessary for updating of the model is acquired. The batch learning is a technique for collectively processing all pieces of data subjected to learning and generating a model at a predetermined timing after all the pieces of data necessary for updating of the model is collected.

(2-4-4) Updating Unit 47

The updating unit 47 updates a learning state of the learning unit 45 by using the evaluation data. The learning unit 45 changes the parameters of the discriminant function in accordance with the output (training data) of the updating unit 47 a plurality of number of times and outputs, for each discriminant function whose parameters are updated, a control condition (position control condition) from a state variable.

The updating unit 47 includes an accumulation unit 47a and an assessment unit 47b. The assessment unit 47b assesses the evaluation data and outputs an assessment result. Based on the assessment result of the evaluation data, the accumulation unit 47a creates training data from the state variable and the evaluation data and accumulates the training data. The learning unit 45 learns the control condition on the basis of the training data accumulated in the accumulation unit 47a.

(2-4-5) Determining Unit 46

On the basis of the trained model obtained as a result of learning performed by the learning unit 45, the determining unit 46 determines a condition (position control condition) for appropriately controlling the position of the shaft 115 from a new state variable correlating with the position of the shaft 115 and outputs the condition. The state variable correlating with the position of the shaft 115 is the output values of the displacement sensors 31 and 32. The position control condition is information for driving the magnetic bearing device 10. In the present embodiment, the position control condition is currents or voltages for driving the magnetic bearing device 10 and is, specifically, voltages (voltage command values) to be applied to the coils 65 of the magnetic bearings 21 and 22.

Figs. 9A and 9B illustrate a data flow when the position control condition is determined from a new state variable on the basis of the trained model.

In Fig. 9A, supervised learning is performed through online learning. In this case, the learning unit 45 generates a trained model in advance by using data (state variable) acquired in a test operation performed before shipment or installation of the magnetic bearing device 10. At the time of the initial start of the operation of the magnetic bearing device 10, the determining unit 46 determines the position control condition on the basis of the trained model generated in advance by the learning unit 45. Thereafter, the learning unit 45 updates the trained model by using data (state variable) newly acquired during the operation of the magnetic bearing device 10. The determining unit 46 determines the position control condition on the basis of the trained model updated by the learning unit 45. In the online learning, the trained model is regularly updated in this manner. The determining unit 46 determines the position control condition on the basis of the latest trained mode.

In Fig. 9B, supervised learning is performed through batch learning. In this case, the learning unit 45 generates a trained model in advance by using data (state variable) acquired in a test operation performed before shipment or installation of the magnetic bearing device 10. During the operation of the magnetic bearing device 10, the determining unit 46 determines the position control condition on the basis of the trained model generated in advance by the learning unit 45. This trained model is not updated after being generated in advance by the learning unit 45. That is, the determining unit 46 determines the position control condition by using the same trained model.

In the configurations illustrated in Figs. 9A and 9B, the control unit 40 included in the magnetic bearing device 10 generates the trained model. However, a server connected to the control unit 40 via a computer network such as the Internet may generate the trained model, or the trained model may be generated by using a cloud computing service.

(2-4-6) Supervised Learning

Supervised learning that is a machine learning technique used by the learning unit 45 will be described. Supervised learning is a technique for generating an output corresponding to unseen input data by using training data. In supervised learning, learning data and a discriminant function are used. The learning data is a set of pairs of input data and training data corresponding to the input data. The input data is, for example, a feature vector in a feature space. The training data is, for example, parameters regarding discrimination, classification, and evaluation of the input data. The discriminant function represents a mapping from input data to an output corresponding to the input data. Supervised learning is a technique of adjusting parameters of the discriminant function by using learning data given in advance such that an error between an output of the discriminant function and training data reduces. Models or algorithms used in supervised learning include a regression analysis, a time-series analysis, a decision tree, a support vector machine, a neural network, ensemble learning, etc.

The regression analysis is, for example, a linear regression analysis, a multiple regression analysis, or a logistic regression analysis. The regression analysis is a technique for applying a model between input data (explanatory variable) and training data (response variable) by using the least squares method or the like. The dimension of the explanatory variable is 1 in the linear regression analysis and 2 or higher in the multiple regression analysis. In the logistic regression analysis, a logistic function (sigmoid function) is used as the model.

In the time-series analysis is, for example, an AR model (autoregressive model), an MA (moving average model), an ARMA model (autoregressive moving average model), an ARIMA model (autoregressive integrated moving average model), an SARIMA model (seasonal autoregressive integrated moving average model), or a VAR model (vector autoregressive model). The AR, MA, ARMA, and VAR models represent a stationary process. The ARIMA and SARIMA models represent non-stationary process. The AR model is a model in which a value regularly changes as time passes. The MA model is a model in which a fluctuation in a certain period is constant. For example, in the MA model, a value at a certain time point is determined by a moving average before the time point. The ARMA model is a combined model of the AR model and the MA model. The ARIMA model is a model in which the ARMA model is applied to a difference between preceding and following values in consideration of a middle-term or long-term trend (increasing or decreasing trend). The SARIMA model is a model in which the ARIMA model is applied in consideration of a middle-term or long-term seasonal fluctuation. The VAR model is a model in which the AR model is expanded to handle multiple variables.

The decision tree is a model for generating complex discrimination boundaries by combining a plurality of discriminators. Details of the decision tree will be described later.

The support vector machine is an algorithm for generating a two-class linear discriminant function. Detailed of the support vector machine will be described later.

The neural network is obtained by modeling a network formed by connecting neurons of the human cranial nervous system by synapses. The neural network means a multi-layer perceptron that uses error backpropagation in a narrow sense. Examples of the typical neural network include a convolutional neural network (CNN) and a recurrent neural network (RNN). The CNN is a type of a non-fully-connected (coarsely-connected) forward-propagation neural network. The RNN is a type of the neural network having a directed cycle. The CNN and the RNN are used in audio/image/moving image recognition and natural language processing.

The ensemble learning is a technique for improving the discrimination performance by combining a plurality of models. The technique used in the ensemble learning is, for example, bagging, boosting, or a random forest. Bagging is a technique for training a plurality of models by using bootstrap sampling of learning data and determining evaluation for new input data by a majority vote of the plurality of models. Boosting is a technique for weighting learning data in accordance with a bagging-based learning result so that incorrectly discriminated learning data is learned in a more concentrated manner than correctly discriminated learning data. The random forest is a technique for generating a decision tree group (random forest) constituted by a plurality of decision trees having a low correlation in the case where the decision tree is used as the model. Details of the random forest will be described later.

In the present embodiment, the neural network, the support vector machine, the decision tree, and the random forest, which will be described next, are used as preferable models or algorithms of supervised learning used by the learning unit 45.

(2-4-6-1) Neural Network

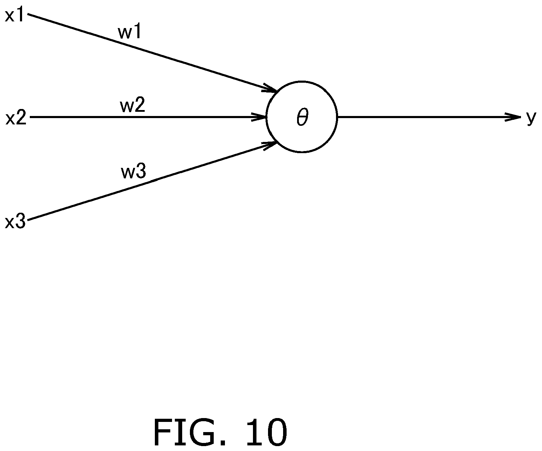

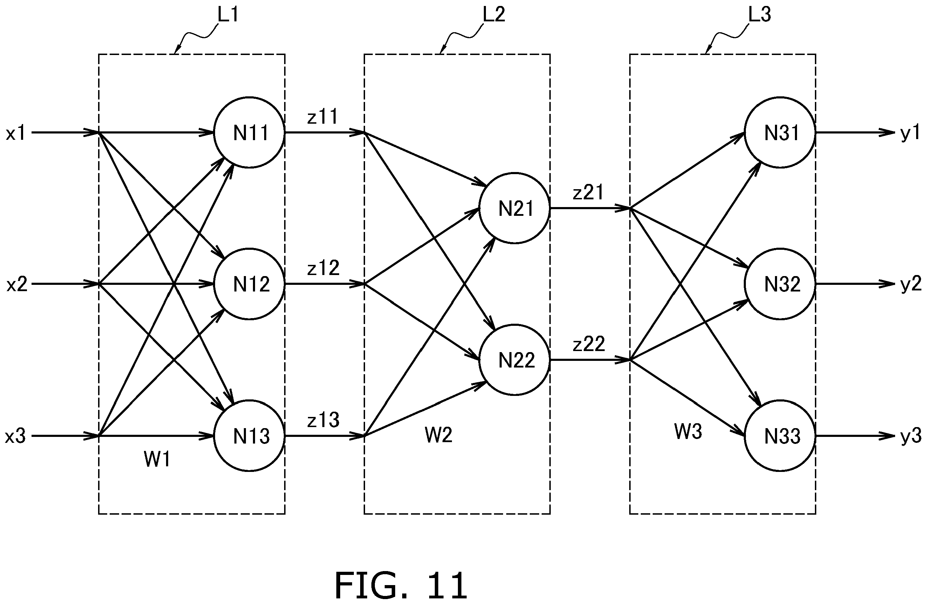

Fig. 10 is a schematic diagram of a model of a neuron in a neural network. Fig. 11 is a schematic diagram of a three-layer neural network configured by combining the neurons illustrated in Fig. 10. As illustrated in Fig. 10, a neuron outputs an output y for a plurality of inputs x (inputs x1, x2, and x3 in Fig. 10). The inputs x (inputs x1, x2, and x3 in Fig. 10) are multiplied by corresponding weights w (weights w1, w2, and w3 in Fig. 10), respectively. The neuron outputs the output y by using Expression (1) below.

[Math. 1]

$$y = \varphi\left(\sum_{i=1}^{n} x_i w_i - \theta\right) \qquad (1)$$

In Expression (1), all of the input x, the output y, and the weight w denote vectors, $\theta$ denotes a bias, and $\varphi$ denotes an activation function. The activation function is a non-linear function and is, for example, a step function (formal neuron), a simple perceptron, a sigmoid function, or a ReLU (ramp function).

In the three-layer neural network illustrated in Fig. 11, a plurality of input vectors x (input vectors x1, x2, and x3 in Fig. 11) are input from an input side (left side in Fig. 11), and a plurality of output vectors y (output vectors y1, y2, and y3 in Fig. 11) are output from an output side (right side in Fig. 11). This neural network is constituted by three layers L1, L2, and L3.

In the first layer L1, the input vectors x1, x2, and x3 are multiplied by corresponding weights and are input to three neurons N11, N12, and N13. In Fig. 11, these weights are collectively denoted by W1. The neurons N11, N12, and N13 output feature vectors z11, z12, and z13, respectively.

In the second layer L2, the feature vectors z11, z12, and z13 are multiplied by corresponding weights and are input to two neurons N21 and N22. In Fig. 11, these weights are collectively denoted by W2. The neurons N21 and N22 output feature vectors z21 and z22, respectively.

In the third layer L3, the feature vectors z21 and z22 are multiplied by corresponding weights and are input to three neurons N31, N32, and N33. In Fig. 11, these weights are collectively denoted by W3. The neurons N31, N32, and N33 output the output vectors y1, y2, and y3, respectively.

There are a learning mode and a prediction mode in operation of the neural network. In the learning mode, the neural network learns the weights W1, W2, and W3 by using a learning dataset. In the prediction mode, the neural network performs prediction such as discrimination by using the parameters of the learned weights W1, W2, and W3.

The weights W1, W2, and W3 can be learned through error backpropagation (backpropagation), for example. In this case, information regarding the error is transferred from the output side toward the input side, that is, from the right side toward the left side in Fig. 11. The error backpropagation is a technique for performing learning by adjusting the weights W1, W2, and W3 such that a difference between the output y obtained when the input x is input to each neuron and the true output y (training data) reduces.

The neural network can be configured to have more than three layers. A machine learning technique using a neural network having four or more layers is known as deep learning.

(2-4-6-2) Support Vector Machine

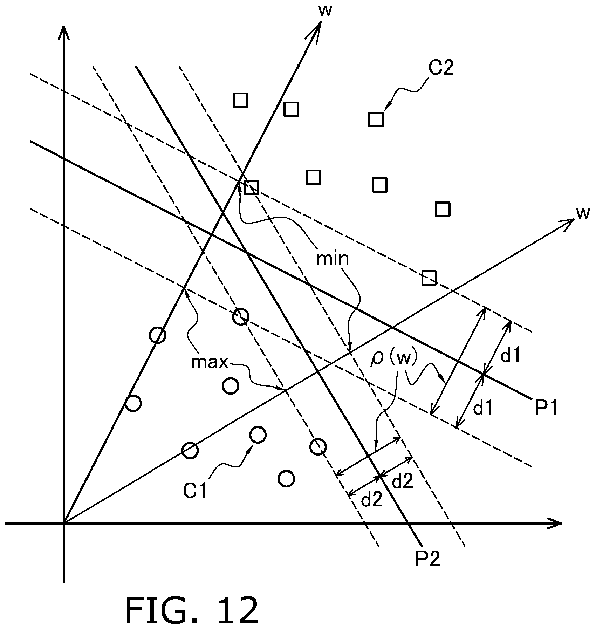

The support vector machine (SVM) is an algorithm that determines a two-class linear discriminant function that implements the maximum margin. Fig. 12 is a diagram for describing the SVM. The two-class linear discriminant function represents discrimination hyperplanes P1 and P2 which are hyperplanes for linearly separating pieces of learning data of two classes C1 and C2 from each other in a feature space illustrated in Fig. 12. In Fig. 12, pieces of learning data of the class C1 are represented by circles, and pieces of learning data of the class C2 are represented by squares. A margin of a discrimination hyperplane refers to a distance between learning data closest to the discrimination hyperplane and the discrimination hyperplane. Fig. 12 illustrates a margin d1 for the discrimination hyperplane P1 and a margin d2 for the discrimination hyperplane P2. In the SVM, the optimum discrimination hyperplane P1 which is a discrimination hyperplane with the maximum margin is determined. A minimum value d1 of the distance between the learning data of one class C1 and the optimum discrimination hyperplane P1 is equal to a minimum value d1 of the distance between the learning data of the other class C2 and the optimum discrimination hyperplane P2.

In Fig. 12, a learning dataset $D_L$ used in supervised learning of a two-class problem is represented by Expression (2) below.
[Math. 2]

$$D_L = \{(t_i, \boldsymbol{x}_i)\}\,(i = 1, \dots, N) \qquad (\,2\,)$$

The learning dataset $D_L$ is a set of pairs of learning data (feature vector) $x_i$ and training data $t_i = \{-1, +1\}$. The number of elements of the learning dataset $D_L$ is N. The training data $t_i$ indicates which of the classes C1 and C2 the learning data $x_i$ belongs to. The class C1 is a class denoted by $t_i = -1$, and the class C2 is a class denoted by $t_i = +1$.

A normalized linear discriminant function that holds for all the pieces of learning data $x_i$ in Fig. 12 is represented by two Expressions (3-1) and (3-2) below. w denotes a coefficient vector and b denotes a bias.
[Math. 3]

$$\text{In the case of } t_i = +1, \qquad w^T x_i + b \geq +1 \qquad (3\text{-}1)$$

$$\text{In the case of } t_i = -1, \qquad w^T x_i + b \leq -1 \qquad (3\text{-}2)$$

These two Expressions are represented by one Expression (4) below.
[Math. 4]

$$t_i(\boldsymbol{w}^T \boldsymbol{x}_i + b) \geq 1 \qquad (\,4\,)$$

In the case where each of the discrimination hyperplanes P1 and P2 is represented by Expression (5) below, the margin d thereof is represented by Expression (6).
[Math. 5]

$$\boldsymbol{w}^T \boldsymbol{x} + b = 0 \qquad (\,5\,)$$

$$\text{d} = \frac{1}{2}\rho(w) = \frac{1}{2}\left(\min_{x_i \in C_2} \frac{w^T x_i}{\|w\|} - \max_{x_i \in C_1} \frac{w^T x_i}{\|w\|}\right) \qquad (\,6\,)$$

In Expression (6), ρ(w) denotes the minimum value of a difference between lengths obtained by projecting the learning data $x_i$ of the class C1 and the learning data $x_i$ of the class C2 onto a normal vector w of each of the discrimination hyperplanes P1 and P2. The terms "min" and "max" in Expression (6) indicate points denoted by reference signs "min" and "max" in Fig. 12, respectively. In Fig. 12, the optimum discrimination hyperplane is the discrimination hyperplane P1 having the maximum margin d.

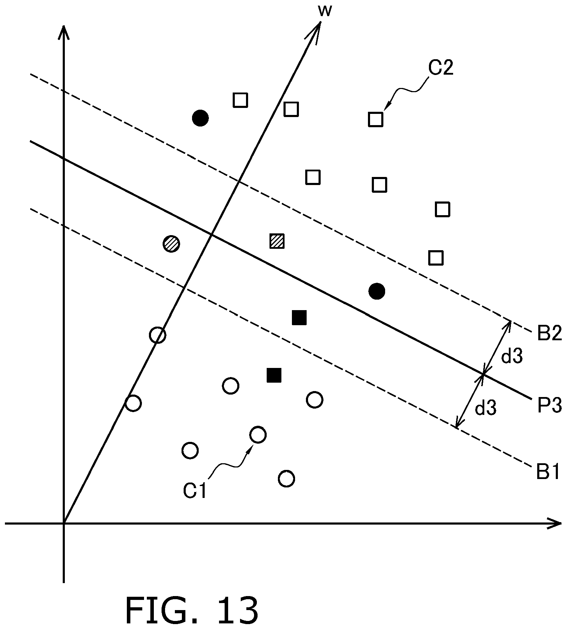

Fig. 12 illustrates the feature space in which the pieces of learning data of two classes are linearly separable. Fig. 13 illustrates a feature space which is similar to that of Fig. 12 and in which pieces of learning data of two classes are linearly inseparable. In the case where pieces of learning data of two classes are linearly inseparable, Expression (7) below expanded by introducing a slack variable $\xi_i$ to Expression (4) can be used.

[Math. 6]

$$t_i(\boldsymbol{w}^T\boldsymbol{x}_i + b) - 1 + \xi_i \geq 0 \qquad (7)$$

The slack variable $\xi_i$ is used only at the time of learning and takes a value of 0 or greater. Fig. 13 illustrates a discrimination hyperplane P3, margin boundaries B1 and B2, and a margin d3. Expression for the discrimination hyperplane P3 is the same as Expression (5). The margin boundaries B1 and B2 are hyperplanes whose distance from the discrimination hyperplane P3 is the margin d3.

In the case where the slack variable $\xi_i$ is equal to 0, Expression (7) is equivalent to Expression (4). At this time, as indicated by blank circles or squares in Fig. 13, the learning data $x_i$ that satisfies Expression (7) is correctly discriminated in the margin d3. At this time, the distance between the learning data $x_i$ and the discrimination hyperplane P3 is greater than or equal to the margin d3.

In the case where the slack variable $\xi_i$ is greater than 0 and less than or equal to 1, as indicated by a hatched circle or square in Fig. 13, the learning data $x_i$ that satisfies Expression (7) is beyond the margin boundaries B1 and B2 but is not beyond the discrimination hyperplane P3 and thus is correctly discriminated. At this time, the distance between the learning data $x_i$ and the discrimination hyperplane P3 is less than the margin d3.

In the case where the slack variable $\xi_i$ is greater than 1, as indicated by black circles or squares in Fig. 13, the learning data $x_i$ that satisfies Expression (7) is beyond the discrimination hyperplane P3 and thus is incorrectly recognized.

By using Expression (7) in which the slack variable $\xi_i$ is introduced, the learning data $x_i$ can be discriminated in this manner also in the case where pieces of learning data of two classes are linearly inseparable.

From the description above, the sum of the slack variable $\xi_i$ for all the pieces of learning data $x_i$ indicates the upper limit of the number of pieces of learning data $x_i$ incorrectly recognized. Here, an evaluation function $L_p$ is defined by Expression (8) below.

[Math. 7]

$$L_p(\boldsymbol{w}, \xi) = \frac{1}{2}\boldsymbol{w}^T\boldsymbol{w} + C\sum_{i=1}^{N}\xi_i \qquad (8)$$

The learning unit 45 finds a solution (w, $\xi$) that minimizes an output value of the evaluation function $L_p$. In Expression (8), a parameter C of the second term denotes a strength of a penalty for incorrect recognition. As the parameter C increases, a solution for prioritizing a reduction in the number of incorrect recognition (second term) over a norm (first term) of w is determined.

(2-4-6-3) Decision Tree

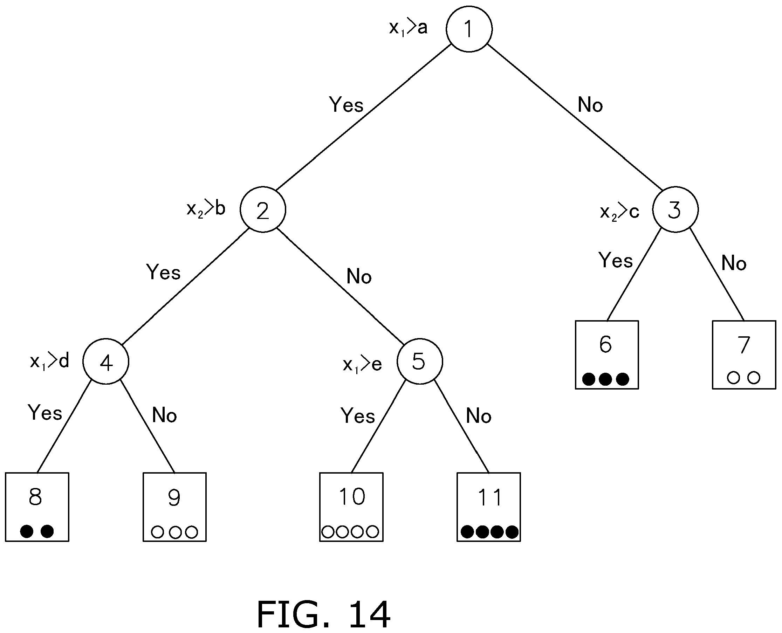

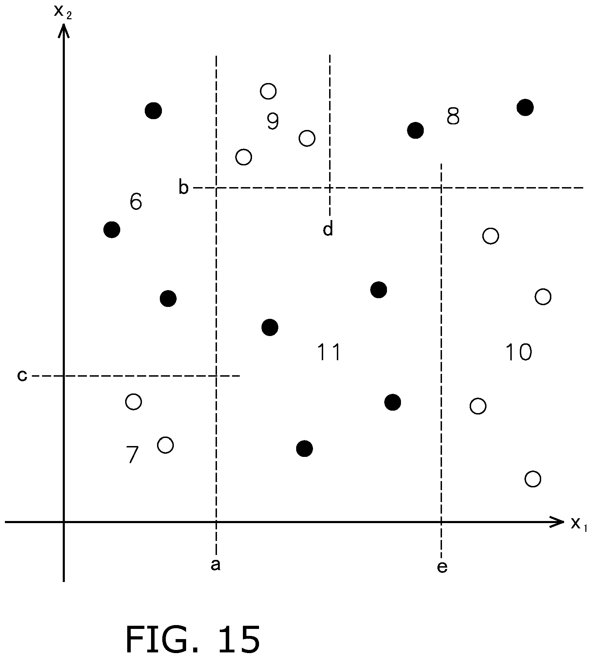

The decision tree is a model for obtaining a complex discrimination boundary (such as a non-linear discriminant function) by combining a plurality of discriminators. A discriminator is, for example, a rule regarding a magnitude relationship between a value on a certain feature axis and a threshold. Examples of a method for configuring a decision tree from learning data include a divide and conquer algorithm for repeatedly finding a rule (discriminator) for dividing a feature space into two. Fig. 14 is an example of a decision tree configured in accordance with the divide and conquer algorithm. Fig. 15 illustrates a feature space divided in accordance with the decision tree of Fig. 14. In Fig. 15, each piece of learning data is denoted by a white or black circle. Each piece of learning data is classified into a white circle class or a black circle class in accordance with the decision tree illustrated in Fig. 14. Fig. 14 illustrates nodes numbered from 1 to 11 and links that link the nodes to each other and are labeled Yes or No. In Fig. 14, a quadrangle denotes a terminal node (leaf node) and a circle denotes a non-terminal node (root node or internal node). The terminal nodes are nodes numbered from 6 to 11, and the non-terminal nodes are nodes numbered from 1 to 5. Each terminal node indicates white dots or black dots representing learning data. Each non-terminal nodes are assigned discriminators. The discriminators are rules for determining a magnitude relationships between values on feature axes $x_1$ and $x_2$ and thresholds a to e. The labels assigned to the respective links indicate the determination results of the corresponding discriminators. In Fig. 15, the discriminators are represented by dotted lines, and a region divided by each of the discriminators is denoted by the numeral of the corresponding node.

In the process of configuring an appropriate decision tree by using the divide and conquer algorithm, it is necessary to consider three points (a) to (c) below.

(a) Selection of a feature axis and a threshold for configuring a discriminator.
(b) Decision about a terminal node. For example, the number of classes to which the learning data included in one terminal node belongs. Alternatively, selection of how far decision tree pruning (obtaining subtrees having the same root node) is to be performed.
(c) Assignment of a class to a terminal node by a majority vote.

In a decision-tree-based learning method, for example, CART, ID3, and C4.5 are used. CART is a technique for generating a binary tree as a decision tree by dividing, for each feature axis, a feature space into two at each of nodes other than terminal nodes as illustrated in Figs. 14 and 15.

In learning using a decision tree, to improve the learning data discrimination performance, it is important to divide the feature space at an appropriate division candidate point at a non-terminal node. An evaluation function called a diversity index may be used as a parameter for evaluating the division candidate point of the feature space. As a function I(t) representing the diversity index of a node t, for example, parameters represented by Expressions (9-1) to (9-3) below are used. K denotes the number of classes.
[Math. 8]

(a) Error rate at node t

$$I(t) = 1 - \max_i P(C_i|t) \qquad (9-1)$$

(b) Cross-entropy (degree of difference)

$$I(t) = -\sum_{i=1}^{K} P(C_i|t) \ln P(C_i|t) \qquad (9-2)$$

(c) Gini coefficient

$$I(t) = \sum_{i-1}^{K} \sum_{j \neq i} P(C_i|t)P(C_j|t) = \sum_{i-1}^{K} P(C_i|t)(1 - P(C_i|t)) \qquad (9-3)$$

In Expressions above, a probability P(Ci|t) is a posteriori probability of a class $C_i$ at the node t, that is, a probability of data of the class $C_i$ being selected at the node t. In the second part of Expression (9-3), a probability P(Cj|t) is a probability of data of the class $C_i$ being incorrectly discriminated to be in a j-th ($\neq$ i-th) class. Thus, the second part represents an error rate at the node t. The third part of Expression (9-3) represents a sum of variances of the probability P(Ci|t) for all the classes.

In the case of dividing a node by using the diversity index as the evaluation function, for example, a technique of pruning the decision tree up to an allowable range that is determined by an error rate at the node and by the complexity of the decision tree.

(2-4-6-4) Random Forest

The random forest is a type of ensemble learning and a technique for enhancing the discrimination performance by combining a plurality of decision trees. In learning using the random forest, a group (random forest) of a plurality of decision trees having a low correlation is generated. The following algorithm is used in generation of the random forest and discrimination using the random forest.

(1) The following is repeated while m = 1 to M.

(a) From N d-dimensional learning data, m bootstrap samples $Z_m$ are generated.
(b) By using $Z_m$ as learning data, each node t is divided in the following procedure to generate m decision trees.

(i) From d features, d' features are selected at random. (d' < d)
(ii) From among the d' selected features, a feature that implements optimum division of the learning data and a division point (threshold) are determined.
(iii) The node t is divided into two at the determined division point.

(2) A random forest constituted by the m decision trees is output.
(3) A discrimination result of each decision tree of the random forest for input data is obtained. A discrimination result of the random forest is determined by a majority vote of the discrimination results of the respective decision trees.

In learning using the random forest, a correlation between decision trees can be reduced by selecting at random a predetermined number of features for use in discrimination at individual non-terminal nodes of the decision trees.

(2-4-7) Reinforcement Learning

Reinforcement learning that is a machine learning technique used by the learning unit 45 will be described. Reinforcement learning is a technique of learning a policy that maximizes a reward that serves as a result of a series of actions. Models or algorithms used in reinforcement learning include Q-learning or the like. Q-learning is a technique for learning a Q-value that represents a value of selecting an action a in a state s. In Q-learning, an action a with the highest Q-value is selected as an optimum action. To determine a high Q-value, an agent of the action a is rewarded for the action a selected in the state s. In Q-learning, the Q-value is updated by using Expression (10) below every time the agent takes an action.

[Math. 9]

$$Q(s_t, a_t) \leftarrow Q(s_t, a_t) + \alpha \left( r_{t+1} + \gamma \max_{\alpha} Q(s_{t+1}, a_t) - Q(s_t, a_t) \right) \qquad (10)$$

In Expression (10), Q(st, at) is the Q-value that represents a value of the agent in a state st selecting an action at. Q(st, at) is a function (action-value function) having a state s and an action a as parameters. $s_t$ denotes a state of the agent at a time t. at denotes an action of the agent at the time t. $\alpha$ denotes a learning coefficient, $\alpha$ is set such that the Q-value converges to an optimum value according to Expression (10). $r_{t+1}$ denotes a reward obtained when the agent transitions to a state $s_{t+1}$. $\gamma$ denotes a discount factor. $\gamma$ is a constant that is greater than or equal to 0 and less than equal to 1. The term including max is a product obtained by multiplying by $\gamma$ the Q-value in the case of selecting the action a with the highest Q-value in the environment $s_{t+1}$. The Q-value determined by using the action-value function is an expected value of the reward to be obtained by the agent.

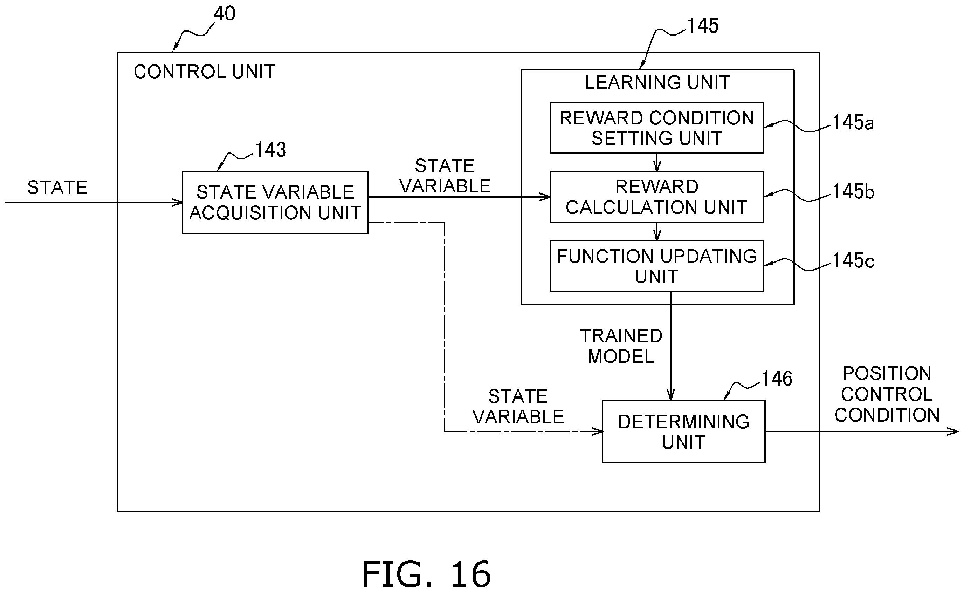

Fig. 16 is a block configuration diagram of the control unit 40 that performs reinforcement learning based on Q-learning. The control unit 40 mainly includes a state variable acquisition unit 143, a learning unit 145, and a determining unit 146. The state variable acquisition unit 143 and the determining unit 146 have the same functions as the state variable acquisition unit 43 and the determining unit 46 illustrated in Figs. 9A and 9B. The learning unit 145 includes a reward condition setting unit 145a, a reward calculation unit 145b, and a function updating unit 145c. The reward condition setting unit 145a sets a reward condition. The reward calculation unit 145b calculates a reward on the basis of a state variable acquired by the state variable acquisition unit 143 and the reward condition set by the reward condition setting unit 145a. The function updating unit 145c updates the action-value function on the basis of the reward calculated by the reward calculation unit 145b. The action-value function is a function for determining the Q-value that is a value of selecting a predetermined action under the state variable acquired by the state variable acquisition unit 143. The function updating unit 145c updates the action-value function by using Expression (10), for example. The function updating unit 145c outputs the optimized action-value function as a trained model. The learning unit 145 adjusts parameters of the action-value function on the basis of the state variable to update the action-value function in this manner, and consequently learns a policy that maximizes the reward and generates a trained model. The learning unit 145 performs reinforcement learning through online learning by using the reward.

(2-4-8) Other Machine Learning Techniques

The learning unit 45 may use various machine learning techniques. Machine learning techniques that may be used by the learning unit 45 include unsupervised learning, semi-supervised learning, transductive learning, multi-task learning, transfer learning, etc. in addition to the supervised learning and the reinforcement learning already described. The learning unit 45 may use these techniques in combination.

Unsupervised learning is a technique of grouping (clustering) input data on the basis of a predetermined statistical property without using training data. Models or algorithms used in unsupervised learning include k-means clustering, the Ward's method, the principal component analysis, etc. The k-means clustering is a technique in which a process of assigning a cluster to each piece of input data at random, calculating the center of each cluster, and re-assigning each piece of input data to a cluster having the nearest center is repeated. The Ward's method is a technique in which a process of assigning each piece of data to a cluster to minimize a distance from each piece of input data of a cluster to the mass center of the cluster is repeated. The principal component analysis is a technique of a multivariate analysis that generates variables called principal components having the lowest correlation from among a plurality of correlated variables.

The semi-supervised learning is a technique of performing learning by using both input data not assigned corresponding training data (unlabeled data) and input data (labeled data) assigned corresponding training data.

The transductive learning is a technique of generating an output corresponding to unlabeled data for use in learning and not generating an output corresponding to unseen input data in semi-supervised learning.

The multi-task learning is a technique of sharing information among a plurality of related tasks and causing these tasks to simultaneously perform learning to obtain a factor that is common to the tasks and increase the prediction accuracy.

The transfer learning is a technique of applying a model trained in advance in a certain domain to another domain to increase the prediction accuracy.

(2-4-9) Data Used in Learning

Description will be given of data used by the control unit 40 to generate a trained model by using a machine learning technique in the present embodiment.

In the case where the control unit 40 uses the technique of supervised learning, the control unit 40 uses pieces of data such as the state variable, the evaluation data, and the control condition.

The state variable includes at least one parameter correlating with the position of the shaft 115. In the present embodiment, the state variable acquisition unit 43 acquires, as the state variable, the output values of the displacement sensors 31 and 32.

The evaluation data includes at least one parameter correlating with a deviation of the position of the shaft 115 from the target value. In the present embodiment, the evaluation data acquisition unit 44 acquires, as the evaluation data, the shaft position deviation that is a difference between the detected value of the position of the shaft 115 and the target value of the position of the shaft 115. The detected value is a value converted from the output values of the displacement sensors 31 and 32. The target value is the center position of the movable range of the shaft 115.

The control condition is a condition that is learned by the learning unit 45 and is for appropriately controlling the position of the shaft 115. In the present embodiment, the learning unit 45 learns the control condition for reducing the shaft position deviation. The determining unit 46 determines, as the control condition, at least one of voltages (voltage command values) to be applied to the coils 65 of the electromagnets of the magnetic bearings 21 and 22 and currents (current command values) that flow through the coils 65.

In addition, in the case where the control unit 40 uses the technique of reinforcement learning, the control unit 40 uses the state variable and the reward condition. The state variable is the same as the state variable used in the case where the control unit 40 uses the technique of supervised learning. The control unit 40 calculates a reward from the shaft position deviation on the basis of a predetermined reward condition. In the present embodiment, the reward condition is set such that the reward increases in the case where the shaft position deviation is small and the reward decreases or does not change in the case where the shaft position deviation is large. The reward condition is, for example, a condition for calculating a reward on the basis of the evaluation data.

(3) Effects

The magnetic bearing device 10 included in the air conditioner 100 according to the present embodiment includes a position control system for controlling the position of the magnetically levitated shaft 115 by adjusting voltages (voltage command values) to be applied to coils of magnetic bearings. The position control system of the related art adjusts the voltage command values or the like on the basis of a predetermined control rule. In this case, appropriate voltage command values are not obtained because of a device-to-device quality variation, a temporal change of the system, and the like. Consequently, the stability of the control of levitation of the shaft may decrease or the shaft may touch a touchdown bearing if a large disturbing force occurs during levitation.

In the magnetic bearing device 10 according to the present embodiment, the control unit 40 having a learning function learns a condition (position control condition) for appropriately controlling the position of the shaft 115 by using the technique of supervised learning on the basis of the state variable correlating with the position of the shaft 115 and the evaluation data regarding the position of the shaft 115. Since the displacement sensors 31 and 32 detect the position of the shaft 115 at a relatively short time interval (for example, every 40 μs), the control unit 40 can control the position of the shaft 115 at a relatively short time interval. Thus the control unit 40 can maintain the stability of control of the position of the shaft 115 for a long period. Consequently, a decrease in the stability of control of levitation of the shaft 115 and the occurrence of a contact of the shaft 115 to the touchdown bearings 116 and 117 due to a disturbing force, which are caused by a quality variation of the magnetic bearing device 10, a temporal change of the system, and the like, can be suppressed.

< Second Embodiment >

In the first embodiment, the state variable acquisition unit 43 acquires, as the state variable, the output values of the displacement sensors 31 and 32. The output values of the displacement sensors 31 and 32 are parameters correlating with the position of the shaft 115.

In the present embodiment, the state variable acquisition unit 43 acquires, as the state variable, a parameter correlating with the position of the shaft 115 other than the output values of the displacement sensors 31 and 32. Thus, the present embodiment is applicable to a sensorless-type magnetic bearing device not including the displacement sensors 31 and 32.

Specifically, the state variable acquisition unit 43 acquires, as the state variable, various kinds of information necessary for estimation of the position of the shaft 115. The information necessary for estimation of the position of the shaft 115 include at least two of detected current values, detected voltage values, detected magnetic flux values, current command values, and voltage command values of the electromagnets of the magnetic bearings 21 and 22. The detected current values are detected values of currents flowing through the coils 65 of electromagnets. The detected voltage values are detected values of voltages applied to the coils 65 of electromagnets. The detected magnetic flux values are detected values of magnetic fields generated by the coils 65 of electromagnets. The detected magnetic flux values are, for example, output values of Hall sensors which are non-contact-type magnetic sensors. The current command values are current values controlled by the control unit 40 and input to the coils 65 of the electromagnets. The voltage command values are voltage values controlled by the control unit 40 and input to the coils 65 of the electromagnets.

Examples of the information necessary for estimation of the position of the shaft 115 include pieces of information (a) to (c) below.

  (a) Voltage command values and detected current values
  (b) Current command values and detected voltage values
  (c) Detected current values and detected magnetic flux values

In the case of using the information (a), the state variable acquisition unit 43 receives the voltage command values and acquires the detected current values to estimate the position of the shaft 115.

In the case of using the information (b), the state variable acquisition unit 43 receives the current command values and acquires the detected voltage values to estimate the position of the shaft 115.

In the case of using the information (a) and (b), the state variable acquisition unit 43 uses a property that the currents (or the current derivative values) and the voltages of the coils 65 correlate with the position of the shaft 115 to estimate the position of the shaft 115. The currents or voltages in a sinusoidal wave shape or a step shape may be input.

In the case of using the information (c), the state variable acquisition unit 43 uses a property that the detected current values and the detected magnetic flux values correlate with the position of the shaft 115 to estimate the position of the shaft 115.

The evaluation data acquisition unit 44 acquires, as the evaluation data, a shaft position deviation that is a difference between the estimated position of the shaft 115 converted from the state variable and the target value the position of the shaft 115.

The learning unit 45 learns the control condition for reducing the shaft position deviation.

The determining unit 46 determines, as the control condition, at least one of voltages (voltage command values) to be applied to the coils 65 of the electromagnets of the magnetic bearings 21 and 22 and currents (current command values) that flow through the coils 65.

<Third Embodiment>

In the first and second embodiments, the control unit 40 having a learning function is used instead of the control unit 940 of the related art illustrated in Fig. 7. That is, the first and second embodiments relate to a configuration in which all the functions of the position detection unit 941, the position control unit 942, and the current control unit 943 illustrated in Fig. 7 have the learning function.

However, only part of functions from among the position detection unit 941, the position control unit 942, and the current control unit 943 illustrated in Fig. 7 may have the learning function. Third to fifth embodiments described below relate to a configuration in which only one function from among the position detection unit 941, the position control unit 942, and the current control unit 943 of the control unit 940 of the related art has the learning function.

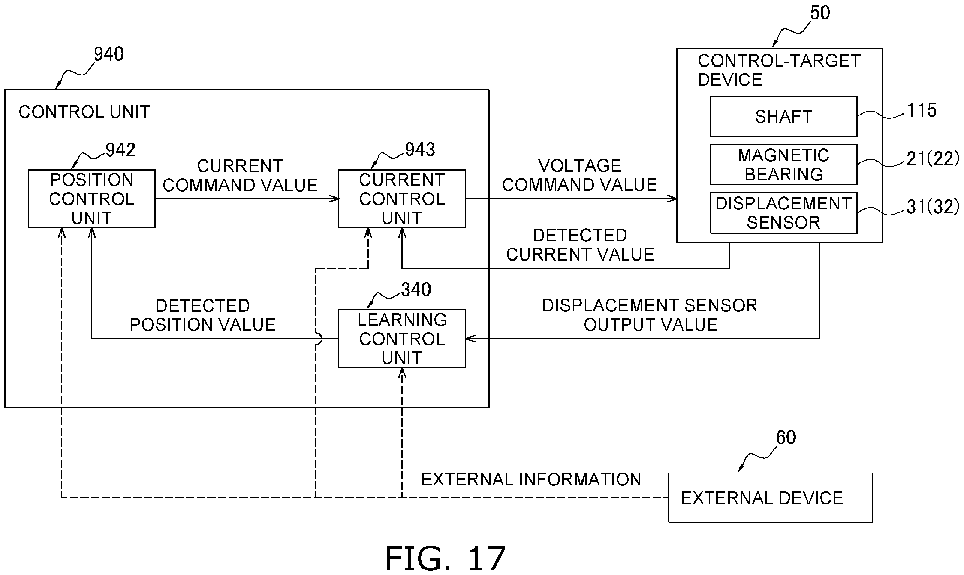

The present embodiment relates to a configuration in which only the position detection unit 941 of the control unit 940 of the related art has the learning function. Fig. 17 is a block configuration diagram of a position control system for the shaft 115 in the present embodiment. As illustrated in Fig. 17, a block corresponding to the position detection unit 941 in Fig. 7 is replaced with a learning control unit 340 having a learning function. The learning control unit 340 has the same function as the control unit 40 according to the first and second embodiments. That is, the learning control unit 340 includes the state variable acquisition unit 43, the evaluation data acquisition unit 44, the learning unit 45, and the determining unit 46 as illustrated in Figs. 9A and 9B. Differences from the control unit 40 in the first and second embodiments will be mainly described below.

In the first and second embodiments, the evaluation data acquisition unit 44 uses, as the to-be-assessed data, the target value (position command value) of the position of the shaft 115 and the detected value (detected position value) of the position of the shaft 115.

In the present embodiment, the evaluation data acquisition unit 44 uses, as the to-be-assessed data, a target value of a parameter (correlated parameter) correlating with the position of the shaft 115 and a detected value of the correlated parameter, instead of the position command value and the detected position value. As the correlated parameter, the state variable acquired by the state variable acquisition unit 43 in the first and second embodiments is used. For example, the evaluation data acquisition unit 44 may use, as the correlated parameter, the output values of the displacement sensors 31 and 32 described in the first embodiment or the information necessary for estimation of the position of the shaft 115 described in the second embodiment.

For example, the evaluation data acquisition unit 44 uses the to-be-assessed data to acquire, as the evaluation data, a deviation (correlated parameter deviation) of the detected value of the correlated parameter relative to the target value of the correlated parameter.

The learning unit 45 learns the control condition for reducing the correlated parameter deviation.

The determining unit 46 determines the detected position value as the condition (position control condition) for appropriately controlling the position of the shaft 115.

In the present embodiment, the learning unit 45 may learn the position control condition at a particular time point. The particular time point is a time point at which the position of the shaft 115 can be identified or estimated on the basis of the correlated parameter. Specifically, the particular time point is a time point at which there is a certain constraint for the position of the shaft 115 or a force applied to the shaft 115 is known. The time point at which there is a certain constraint for the position of the shaft 115 is, for example, a time point at which the shaft 115 is in contact with the touchdown bearing 116 or 117. The time point at which the force applied to the shaft 115 is known is, for example, a time point at which the shaft 115 is falling freely.

In the present embodiment, the evaluation data acquisition unit 44 may acquire, as the evaluation data, the true value of the position of the shaft 115 instead of the correlated parameter deviation. The detected position value included in the to-be-assessed data may be used as the true value of the position of the shaft 115. Note that the position of the shaft 115 identified or estimated at the above-described "particular time point" may be used as the true value of the position of the shaft 115.

<Fourth Embodiment>

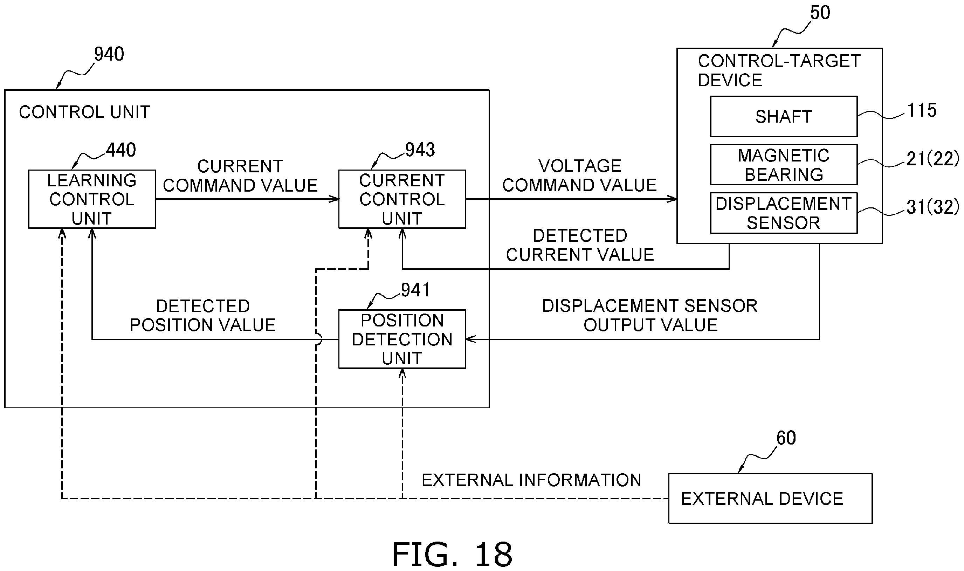

The present embodiment relates to a configuration in which only the position control unit 942 of the control unit 940 of the related art has the learning function. Fig. 18 is a block configuration diagram of a position control system for the shaft 115 in the present embodiment. As illustrated in Fig. 18, a block corresponding to the position control unit 942 in Fig. 7 is replaced with a learning control unit 440 having a learning function. The learning control unit 440 has the same function as the control unit 40 according to the first and second embodiments. That is, the learning control unit 440 includes the state variable acquisition unit 43, the evaluation data acquisition unit 44, the learning unit 45, and the determining unit 46 as illustrated in Figs. 9A and 9B. Differences from the control unit 40 in the first and second embodiments will be mainly described below.

In the present embodiment, the state variable acquisition unit 43 uses, as the state variable, the target value (position command value) of the position of the shaft 115 and the detected value (detected position value) of the position of the shaft 115.

The evaluation data acquisition unit 44 uses, as the to-be-assessed data, the position command value and the detected position value. The evaluation data acquisition unit 44 acquires, as the evaluation data, the shaft position deviation that is a difference between the position command value and the detected position value.

The learning unit 45 learns the control condition for reducing the shaft position deviation.

The determining unit 46 determines, as the condition (position control condition) for appropriately controlling the position of the shaft 115, at least one of voltages (voltage command values) to be applied to the coils 65 of the electromagnets of the magnetic bearings 21 and 22 and currents (current command values) that flow through the coils 65.

<Fifth Embodiment>

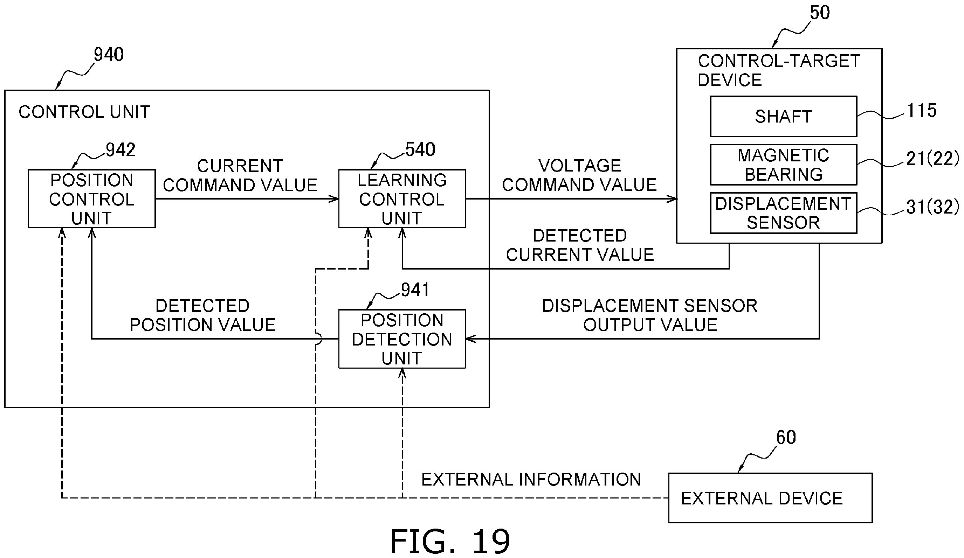

The present embodiment relates to a configuration in which only the current control unit 943 of the control unit 940 of the related art has the learning function. Fig. 19 is a block configuration diagram of a position control system for the shaft 115 in the present embodiment. As illustrated in Fig. 19, a block corresponding to the current control unit 943 in Fig. 7 is replaced with a learning control unit 540 having a learning function. The learning control unit 540 has the same function as the control unit 40 according to the first and second embodiments. That is, the learning control unit 540 includes the state variable acquisition unit 43, the evaluation data acquisition unit 44, the learning unit 45, and the determining unit 46 as illustrated in Figs. 9A and 9B. Differences from the control unit 40 in the first and second embodiments will be mainly described below.

In the present embodiment, the state variable acquisition unit 43 acquires, as the state variable, currents (current command values) flowing through the coils 65 of the electromagnets of the magnetic bearings 21 and 22 and the detected value (detected position value) of the position of the shaft 115.

The evaluation data acquisition unit 44 uses, as the to-be-assessed data, the current command values and the detected position value. The evaluation data acquisition unit 44 acquires a quantity (response level) relating to responsivity of current control. The response level is a parameter that is more preferable if the value is closer to zero. The response level may be, for example, an absolute value, root mean square (RMS), or mean square (MS) of a deviation of the detected current value relative to the current command value, or may be an overshoot amount or setting time of the deviation in the case where a disturbance is forcibly added.

The learning unit 45 learns the control condition for reducing the response level.

The determining unit 46 determines, as the condition (position control condition) for appropriately controlling the position of the shaft 115, voltages (voltage command values) to be applied to the coils 65 of the electromagnets of the magnetic bearings 21 and 22.

-Modifications-

Modifications of at least part of the first to fifth embodiments will be described below.

(1) Modification A

In the present modification, the evaluation data acquisition unit 44 in the first, second, and fifth embodiments further uses, as the to-be-assessed data, parameters correlating with current values for driving the magnetic bearings 21 and 22. The evaluation data acquisition unit 44 further acquires, as the evaluation data, the current values for driving the magnetic bearings 21 and 22. The updating unit 47 causes the learning unit 45 to perform learning so as to make the current values for driving the magnetic bearings 21 and 22 less than or equal to a predetermined value. The predetermined value is, specifically, an allowable current value of an inverter for driving the magnetic bearings 21 and 22. In the present modification, the occurrence of a failure of an inverter can be suppressed in the case where the specifications of the inverter are set.

(2) Modification B

In the present modification, the evaluation data acquisition unit 44 in the first, second, and fifth embodiments further uses, as the to-be-assessed data, a parameter correlating with a temperature of the inverter for driving the magnetic bearings 21 and 22. The evaluation data acquisition unit 44 further acquires, as the evaluation data, the temperature of the inverter for driving the magnetic bearings 21 and 22. The updating unit 47 causes the learning unit 45 to perform learning so as to make the temperature of the inverter less than or equal to a predetermined value. The predetermined value is, specifically, an allowable temperature of the inverter. In the present modification, the occurrence of a failure of an inverter can be suppressed in the case where the specifications of the inverter are set.

(3) Modification C

In the present modification, the state variable acquisition unit 43 in the first, second, fourth, and fifth embodiments further acquires, as the state variable, detected current values of the electromagnets of the magnetic bearings 21 and 22 in the case where the magnetic bearings 21 and 22 are driven by a voltage-type inverter, and further acquires, as the state variable, detected voltage values of the electromagnets of the magnetic bearings 21 and 22 in the case where the magnetic bearings 21 and 22 are driven by a current-type inverter.

(4) Modification D

In the present modification, the evaluation data acquisition unit 44 in the modification C further uses, as the to-be-assessed data, the current command value and the detected position value. The evaluation data acquisition unit 44 further acquires a quantity (response level) relating to responsivity of current control. The response level is a parameter that is more preferable if the value is closer to zero. The response level may be, for example, an absolute value, root mean square (RMS), or mean square (MS) of a deviation of the detected current value relative to the current command value, or may be an overshoot amount or setting time of the deviation in the case where a disturbance is forcibly added. The updating unit 47 causes the learning unit 45 to perform learning to reduce the response level.

(5) Modification E

In the present modification, the state variable acquisition unit 43 in the first, second, fourth, and fifth embodiments further acquires, as the state variable, the number of rotations of the shaft 115.

(6) Modification F

In the present modification, the state variable acquisition unit 43 in the first, second, fourth, and fifth embodiments further acquires, as the state variable, at least one of parameters correlating with an operation condition of the air conditioner 100.

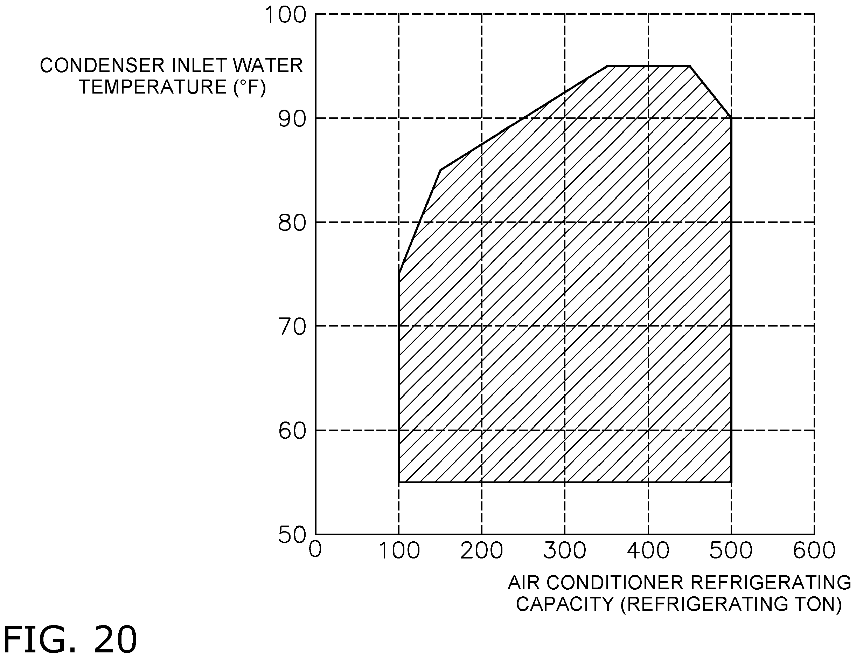

The operation condition of the air conditioner 100 refers to a predetermined range of a refrigerating capacity of the air conditioner 100 and a predetermined range of an inlet water temperature of the condenser 120. The inlet water temperature is a temperature of water that is a medium that is for heat exchange with refrigerant circulating through the refrigerant circuit 190 of the air conditioner 100 and is a temperature of water that flows into the condenser 120. Fig. 20 is an example of the operation condition of the air conditioner 100. The unit for the refrigerating capacity of the air conditioner 100 is refrigerating ton. The unit for the inlet water temperature of the condenser 120 is degrees Fahrenheit. A hatched region in Fig. 20 indicates the operation condition of the air conditioner 100 and is a range in which air conditioning can be implemented by the air conditioner 100.

The parameters correlating with the operation condition of the air conditioner 100 are specifically data relating to operation information of the air conditioner 100 listed below.

(a) Temperature of refrigerant suctioned to the compressor 110
(b) Temperature of refrigerant discharged from the compressor 110
(c) Pressure of refrigerant suctioned to the compressor 110
(d) Pressure of refrigerant discharged from the compressor 110
(e) Flow rate of refrigerant that circulates through the refrigerant circuit 190
(f) Temperature of water that flows into the condenser 120
(g) Temperature of water that flows out from the condenser 120
(h) Temperature of water that flows into the evaporator 140
(i) Temperature of water that flows out from the evaporator 140
(j) Opening degree of the inlet guide vane 113b
(k) Number of rotations of the motor 114
(l) Rotational angle of the motor 114
(m) Torque of the motor 114
(n) Current value of the motor 114

"Water" in the parameters (f) to (i) means water which is a medium for heat exchange with refrigerant in the condenser 120 or the evaporator 140. The parameters correlating with the operation condition of the air conditioner 100 include at least one of the aforementioned parameters (a) to (n). The parameter correlating with the operation condition of the air conditioner 100 may further include information regarding the type of the refrigerant.

In the present modification, the control unit 40 can learn an optimum operation condition for each operation condition of the air conditioner 100.

(7) Modification G

In the present modification, the state variable acquisition unit 43 in the modification F further acquires, as the state variable, at least one parameter correlating with an electromagnetic force applied to the shaft 115.

The parameter correlating with the electromagnetic force applied to the shaft 115 includes at least one of a parameter correlating with a refrigerant load of the air conditioner 100 and a parameter correlating with a physical characteristic of the air conditioner 100.

The parameter correlating with the refrigerant load of the air conditioner 100 includes at least one of the parameters (a) to (n) listed in the modification F. The parameter correlating with the refrigerant load of the air conditioner 100 may further include information regarding the type of the refrigerant.

The parameter correlating with the physical characteristic of the air conditioner 100 is at least one of a weight of the shaft 115 and a force applied to the shaft 115. The force applied to the shaft 115 is at least one of a Coriolis force applied to the shaft 115 and a centrifugal force applied to the shaft 115. Instead of the force applied to the shaft 115, at least one of a parameter correlating with an eccentric amount of the shaft 115 and the number of rotations of the motor 114 may be used.

In the present modification, movement of the axis of the shaft 115 during operation of the air conditioner 100 can be suppressed.

(8) Modification H

In the present modification, the state variable acquisition unit 43 in the modification F further acquires, as the state variable, at least one parameter correlating with a characteristic of the magnetic bearings 21 and 22.

The parameter correlating with the characteristic of the magnetic bearings 21 and 22 includes at least one of a parameter correlating with an inductance of the coils 65 of the electromagnets of the magnetic bearings 21 and 22 and a parameter correlating with a resistance of the coils 65. The parameter correlating with the inductance of the coils 65 is, for example, detected values of the currents flowing through the coils 65. The parameter correlating with the resistance of the coils 65 is a parameter correlating with a temperature of the coils 65 or an ambient temperature of the coils 65 and, specifically, include at least one of the parameters (a) to (i) listed in the modification F. The parameter correlating with the resistance of the coils 65 may further include information regarding the type of the refrigerant.

In the present modification, movement of the axis of the shaft 115 during operation of the air conditioner 100 can be suppressed.

(9) Modification I

In the present modification, the evaluation data acquisition unit 44 in the first, second, and fifth embodiments further uses, as the to-be-assessed data, a parameter correlating with power consumption of the magnetic bearings 21 and 22.

The parameter correlating with the power consumption of the magnetic bearings 21 and 22 includes at least two of a parameter correlating with current values for driving the magnetic bearings 21 and 22, a parameter correlating with voltage values for driving the magnetic bearings 21 and 22, and a parameter correlating with a resistance of the coils 65 of the electromagnets of the magnetic bearings 21 and 22. The parameter correlating with the current values for driving the magnetic bearings 21 and 22 is, for example, detected values of the currents flowing through the coils 65. The parameter correlating with the resistance of the coils 65 is a parameter correlating with a temperature of the coils 65 or an ambient temperature of the coils 65 and, specifically, include at least one of the parameters (a) to (i) listed in the modification F. The parameter correlating with the resistance of the coils 65 may further include information regarding the type of the refrigerant.

The evaluation data acquisition unit 44 further acquires, as the evaluation data, power consumption of the magnetic bearings 21 and 22.

The updating unit 47 causes the learning unit 45 to perform learning so as to reduce the power consumption of the magnetic bearings 21 and 22.

In the present modification, the control unit 40 can learn an operation condition with which power consumption of the air conditioner 100 can be reduced.

(10) Modification J

In the present modification, the state variable acquisition unit 43 in the modifications A, B, and I further acquires, as the state variable, at least one parameter correlating with an operation condition of the air conditioner 100. The parameter correlating with the operation condition of the air conditioner 100 includes at least one of the parameters (a) to (n) listed in the modification F. The parameter correlating with the operation condition of the air conditioner 100 may further include information regarding the type of the refrigerant.

(11) Modification K

In the present modification, the evaluation data acquisition unit 44 in the first, second, fourth, and fifth embodiments further uses, as the to-be-assessed data, at least one parameter correlating with input energy supplied to the compressor 110 driven by the motor 114. The parameter correlating with the input energy includes at least one of input currents of the magnetic bearings 21 and 22, input powers of the magnetic bearings 21 and 22, an input current of an inverter for driving the magnetic bearings 21 and 22, input power of the inverter for driving the magnetic bearings 21 and 22, an input current of the motor 114, input power of the motor 114, an input current of an inverter for driving the motor 114, and input power of the inverter for driving the motor 114. The evaluation data acquisition unit 44 further acquires, as the evaluation data, input energy supplied to the compressor 110.

The updating unit 47 causes the learning unit 45 to perform learning so as to reduce the input energy supplied to the compressor 110.

In the present modification, the control unit 40 can learn a control condition with which the input energy supplied to the compressor 110 is minimized.

(12) Modification L

In the present modification, the state variable acquisition unit 43 in the modification J further acquires, as the state variable, at least one of at least one parameter correlating with the operation condition of the air conditioner 100 and at least one parameter correlating with adiabatic efficiency of the impeller 113a coupled to the shaft 115.

The parameter correlating with the operation condition of the air conditioner 100 includes at least one of the parameters (a) to (n) listed in the modification F. The parameter correlating with the operation condition of the air conditioner 100 may further include information regarding the type of the refrigerant.

The parameter correlating with the adiabatic efficiency of the impeller 113a includes at least one of a parameter correlating with a pressure of the refrigerant and a parameters correlating with a temperature of the refrigerant. The parameter correlating with the pressure of the refrigerant include at least one of the parameters (a) to (e) listed in the modification F. The parameter correlating with the pressure of the refrigerant may further include information regarding the type of the refrigerant. The parameter correlating with the temperature of the refrigerant includes at least one of the parameters (a) to (i) listed in the modification F. The parameter correlating with the temperature of the refrigerant may further include information regarding the type of the refrigerant.

In the present modification, the control unit 40 can learn a control condition with which the adiabatic efficiency of the impeller 113a is maximized.

(13) Modification M

In the present modification, the state variable acquisition unit 43 further acquires, as the state variable, a parameter correlating with temperatures of the displacement sensors 31 and 32 in the case of acquiring the output values of the displacement sensors 31 and 32. The parameter correlating with the temperatures of the displacement sensors 31 and 32 includes at least one of the parameters (a) to (i) listed in the modification F. The parameter correlating with the temperature of the refrigerant may further include information regarding the type of the refrigerant.

In the present modification, the control unit 40 can compensate for shifts of the detected values of the displacement sensors 31 and 32 due to temperatures by using, as the state variable, information regarding the temperatures of the displacement sensors 31 and 32 having temperature characteristics. Thus, the control unit 40 can acquire estimated values of the positions of the touchdown bearings 116 and 117 at high accuracy, and can align the shaft 115 so that the axis of the shaft 115 approaches the center of the touchdown bearings 116 and 117.

(14) Modification N

In the present modification, calibration of the displacement sensors 31 and 32 is performed when the magnetic bearing device 10 starts operating in the first, second, fourth, and fifth embodiments. For example, an abnormality of the displacement sensors 31 and 32 can be detected through calibration.

Calibration of the displacement sensors 31 and 32 is performed by forcibly changing parameters such as the position of the shaft 115, the current values of the coils 65 of the electromagnets of the magnetic bearings 21 and 22, and the voltage values of the coils 65, for example. In this case, a periodic waveform may be applied to these parameters, these parameters may be changed in a step-like manner, or these parameters may be changed in a ramp-like manner. A periodic waveform refers to, for example, a sinusoidal wave, a rectangular wave, a triangular wave, and a sawtooth wave. The frequency of the periodic waveform may be changed intermittently or may be changed continuously.

In addition, calibration of the displacement sensors 31 and 32 may be performed by superimposing a perturbation by a predetermined waveform and the position command value of the shaft 115. The predetermined waveform refers to, for example, a periodic waveform, a pulse waveform, and a step waveform. A periodic waveform refers to, for example, a sinusoidal wave, a rectangular wave, a triangular wave, and a sawtooth wave.

In addition, calibration of the displacement sensors 31 and 32 may be performed by providing a certain constraint for the position of the shaft 115. For example, an operation of bringing the shaft 115 into contact with the touchdown bearing 116 or 117 and an operation in which a force applied to the shaft 115 is known may be performed. The operation in which the force applied to the shaft 115 is known is, for example, an operation in which the shaft 115 is falling freely.

(15) Modification O

In each of the embodiments and modifications described above, the control unit 40 learns conditions for appropriately controlling the position of the shaft 115 by using a technique of supervised learning or reinforcement learning. However, the control unit 40 may learn conditions for appropriately controlling the position of the shaft 115 by using a technique in which supervised learning and reinforcement learning are used in combination.

(16) Modification P

In each of the embodiments and modifications described above, a supporting mechanism of a bearingless motor (motor having a function of supporting a shaft in a non-contact manner) may be used in the radial magnetic bearing 21.

-In Closing-

The present invention is defined by the scope of the appended claims.

Industrial Applicability

A magnetic bearing device is capable of appropriately controlling a position of an object to be supported.

**REFERENCE SIGNS LIST**

| | |
|---|---|
| 10 | magnetic bearing device |
| 21 | radial magnetic bearing (magnetic bearing) |
| 22 | thrust magnetic bearing (magnetic bearing) |
| 31 | radial displacement sensor (displacement sensor) |
| 32 | thrust displacement sensor (displacement sensor) |
| 43 | state variable acquisition unit |
| 44 | evaluation data acquisition unit |
| 45 | learning unit |
| 46 | determining unit |
| 47 | updating unit |
| 47a | accumulation unit |
| 47b | assessment unit |
| 51 | first electromagnet (electromagnet) |
| 52 | second electromagnet (electromagnet) |
| 53 | third electromagnet (electromagnet) |
| 54 | fourth electromagnet (electromagnet) |
| 100 | air conditioner (refrigeration apparatus) |
| 110 | compressor |
| 113a | impeller |
| 115 | shaft |
| 120 | condenser |
| 130 | expansion mechanism |
| 140 | evaporator |
| 190 | refrigerant circuit |

**CITATION LIST**

**PATENT LITERATURE**

PTL 1: Japanese Unexamined Utility Model Registration Application Publication No. H04-040308

**EP 3 940 254 B1**

**Claims**

1. A machine learning device configured to learn a control condition for a magnetic bearing device (10) that comprises a magnetic bearing (21, 22) having a plurality of electromagnets (51 to 54) configured to apply an electromagnetic force to a shaft (115), the machine learning device comprising:

   a learning unit (45);
   a state variable acquisition unit (43) configured to acquire a state variable including at least one parameter correlating with a position of the shaft; and
   an evaluation data acquisition unit (44) configured to acquire evaluation data including at least one parameter from among a measured value of the position of the shaft, a target value of the position of the shaft, and a parameter correlating with a deviation from the target value,
   **characterized in that**:

   the evaluation data is a deviation of a detected value of the position of the shaft relative to the target value of the position of the shaft;
   the machine learning device further comprises an updating unit (47) configured to update a learning state of the learning unit by using the evaluation data; and
   the learning unit is configured to learn the control condition in accordance with an output of the updating unit.

2. The machine learning device according to Claim 1, wherein:

   the state variable includes at least an output value of a displacement sensor (31, 32) configured to output a signal according to the position of the shaft; and
   the learning unit is configured to learn, as the control condition, at least one of a voltage value of the electromagnets and a current value of the electromagnets.

3. The machine learning device according to Claim 1, wherein:

   the state variable includes at least a current value and a voltage value of the electromagnets or a current value and a magnetic flux of the electromagnets; and
   the learning unit is configured to learn, as the control condition, at least one of the voltage value of the electromagnets and the current value of the electromagnets.

4. The machine learning device according to Claim 1, wherein:

   the state variable includes at least an output value of a displacement sensor (31, 32) configured to outputs a signal according to the position of the shaft;
   the evaluation data includes at least a true value of the position of the shaft; and
   the learning unit is configured to learn, as the control condition, the position of the shaft.

5. The machine learning device according to Claim 1,

   wherein the state variable includes at least a current value and a voltage value of the electromagnets or a current value and a magnetic flux of the electromagnets,
   wherein the evaluation data includes at least a true value of the position of the shaft, and
   wherein the learning unit learns, as the control condition, the position of the shaft.

6. The machine learning device according to Claim 1,

   wherein the state variable includes at least a detected value of the position of the shaft and a command value of the position of the shaft, and
   wherein the learning unit learns, as the control condition, at least one of a voltage value of the electromagnets and a current value of the electromagnets.

7. The machine learning device according to Claim 2 or 3,
   wherein the updating unit causes the learning unit to further perform learning so as to make a current value for driving the magnetic bearing less than or equal to a predetermined allowable value.

**8.** The machine learning device according to Claim 2 or 3,

wherein the evaluation data further includes a parameter correlating with a temperature of an inverter configured to drives the magnetic bearing, and

wherein the updating unit causes the learning unit to further perform learning so as to make the temperature of the inverter lower than or equal to a predetermined allowable value.

**9.** The machine learning device according to any one of Claims 2, 3, and 6,
wherein the state variable

further includes a detected current value of the electromagnets in a case where the magnetic bearing is driven by a voltage-type inverter, and

further includes a detected voltage value of the electromagnets in a case where the magnetic bearing is driven by a current-type inverter.

**10.** The machine learning device according to Claim 9,
wherein the updating unit causes the learning unit to further perform learning in order to reduce a value correlating with responsivity of control of the current value.

**11.** The machine learning device according to any one of Claims 2, 3, and 6,
wherein the state variable further includes a number of rotations of the shaft.

**12.** The machine learning device according to any one of Claims 2, 3, and 6,

wherein the state variable further includes at least one parameter correlating with an operation condition of a refrigeration apparatus (100),

wherein the refrigeration apparatus comprises a refrigerant circuit (190) in which a compressor (110), a condenser (120), an expansion mechanism (130), and an evaporator (140) are coupled, and

wherein the operation condition includes a range of a refrigerating capacity of the refrigeration apparatus and a range of a temperature of a medium that is for heat exchange with refrigerant circulating through the refrigerant circuit and that flows into the condenser.

**13.** The machine learning device according to Claim 12,

wherein the state variable further includes at least one parameter correlating with the electromagnetic force applied to the shaft, and

wherein the parameter correlating with the electromagnetic force includes at least one of a parameter correlating with a refrigerant load of the refrigeration apparatus and a parameter correlating with a physical characteristic of the refrigeration apparatus.

**14.** The machine learning device according to Claim 12,

wherein the state variable further includes at least one parameter correlating with a characteristic of the magnetic bearing, and

wherein the parameter correlating with the characteristic of the magnetic bearing includes at least one of a parameter correlating with an inductance of coils of the electromagnets and a parameter correlating with a resistance of the coils of the electromagnets.

**15.** The machine learning device according to Claim 2 or 3,

wherein the evaluation data further includes a parameter correlating with power consumption of the magnetic bearing,

wherein the updating unit causes the learning unit to further perform learning in order to reduce the power consumption, and

wherein the parameter correlating with the power consumption includes at least two of a current value for driving the magnetic bearing, a voltage value for driving the magnetic bearing, and a resistance of coils of the electromagnets.

**16.** The machine learning device according to any one of Claims 7, 8, and 15,

wherein the state variable further includes at least one parameter correlating with an operation condition of a refrigeration apparatus (100),

wherein the refrigeration apparatus comprises a refrigerant circuit (190) in which a compressor (110), a condenser (120), an expansion mechanism (130), and an evaporator (140) are coupled, and

wherein the operation condition includes a range of a refrigerating capacity of the refrigeration apparatus and a range of a temperature of a medium that is for heat exchange with refrigerant circulating through the refrigerant circuit and that flows into the condenser.

**17.** The machine learning device according to any one of Claims 2, 3, and 6,

wherein the evaluation data further includes at least one parameter correlating with input energy supplied to a compressor (110), and

wherein the updating unit causes the learning unit to further perform learning in order to reduce the input energy.

**18.** The machine learning device according to Claim 17,

wherein the state variable further includes at least one of at least one parameter correlating with an operation condition of a refrigeration apparatus (100) and at least one parameter correlating with adiabatic efficiency of an impeller (113a) coupled to the shaft,

wherein the refrigeration apparatus comprises a refrigerant circuit (190) in which the compressor (110), a condenser (120), an expansion mechanism (130), and an evaporator (140) are coupled,

wherein the operation condition includes a range of a refrigerating capacity of the refrigeration apparatus and a range of a temperature of a medium that is for heat exchange with refrigerant circulating through the refrigerant circuit and that flows into the condenser, and

wherein the parameter correlating with the adiabatic efficiency of the impeller includes at least one of a parameter correlating with a pressure of the refrigerant and a parameter correlating with a temperature of the refrigerant.

**19.** The machine learning device according to Claim 2 or 4,
wherein the state variable further includes a parameter correlating with a temperature of the displacement sensor.

**20.** The machine learning device according to any one of Claims 1 to 19,

wherein the updating unit calculates a reward, based on the evaluation data, and
wherein the learning unit performs learning by using the reward.

**21.** The machine learning device according to any one of Claims 1 to 19,

wherein the learning unit changes a parameter of a function in accordance with the output of the updating unit a plurality of number of times and outputs, for each function whose parameter is changed, the control condition from the state variable,

wherein the updating unit comprises an accumulation unit (47a) and an assessment unit (47b),

wherein the assessment unit assesses the evaluation data and outputs an assessment result,

wherein the accumulation unit creates, based on the assessment result, training data from the state variable and the evaluation data, and accumulates the training data, and

wherein the learning unit performs learning, based on the training data accumulated in the accumulation unit.

**22.** The machine learning device according to any one of Claims 1 to 21, wherein
the learning unit outputs the control condition, based on a trained model obtained as a result of learning.

**23.** A magnetic bearing device comprising the machine learning device according to Claim 22.

**Patentansprüche**

**1.** Maschinenlernvorrichtung, die konfiguriert ist, eine Steuerbedingung für eine Magnetlagervorrichtung (10) zu lernen, die ein Magnetlager (21, 22) mit mehreren Elektromagneten (51 bis 54) aufweist, die konfiguriert sind, eine elektromagnetische Kraft auf eine Welle (115) auszuüben, wobei die Maschinenlernvorrichtung aufweist:

eine Lerneinheit (45);
eine Zustandsvariablen-Erfassungseinheit (43), die konfiguriert ist, eine Zustandsvariable zu erfassen, die mindestens einen Parameter enthält, der mit einer Position der Welle korreliert; und
eine Auswertungsdaten-Erfassungseinheit (44), die konfiguriert ist, Auswertungsdaten zu erfassen, die mindestens einen Parameter aus einem Messwert der Position der Welle, einem Sollwert der Position der Welle und einem Parameter enthalten, der mit einer Abweichung von dem Sollwert korreliert,
**dadurch gekennzeichnet, dass**:

die Auswertungsdaten eine Abweichung eines erkannten Wertes der Position der Welle relativ zum Sollwert der Position der Welle sind;
die Maschinenlernvorrichtung ferner eine
Aktualisierungseinheit (47) aufweist, die konfiguriert ist, einen Lernzustand der Lerneinheit unter Verwendung der Auswertungsdaten zu aktualisieren; und
die Lerneinheit konfiguriert ist, die Steuerbedingung gemäß einer Ausgabe der Aktualisierungseinheit zu lernen.

2. Maschinenlernvorrichtung nach Anspruch 1, wobei:

die Zustandsvariable mindestens einen Ausgabewert eines Verschiebungssensors (31, 32) aufweist, der konfiguriert ist, ein Signal entsprechend der Position der Welle auszugeben; und
die Lerneinheit konfiguriert ist, als Steuerbedingung mindestens einen Spannungswert der Elektromagneten und einen Stromwert der Elektromagneten zu lernen.

3. Maschinenlernvorrichtung nach Anspruch 1, wobei:

die Zustandsvariable mindestens einen Stromwert und einen Spannungswert der Elektromagneten oder einen Stromwert und einen magnetischen Fluss der Elektromagneten enthält; und
die Lerneinheit konfiguriert ist, als Steuerbedingung mindestens einen des Spannungswerts der Elektromagneten und des Stromwerts der Elektromagneten zu lernen.

4. Maschinenlernvorrichtung nach Anspruch 1, wobei:

die Zustandsvariable mindestens einen Ausgabewert eines Wegsensors (31, 32) aufweist, der konfiguriert ist, ein Signal entsprechend der Position der Welle auszugeben;
die Auswertungsdaten mindestens einen wahren Wert der Position der Welle enthalten; und
die Lerneinheit konfiguriert ist, die Position der Welle als die Steuerbedingung zu lernen.

5. Maschinenlernvorrichtung nach Anspruch 1,

wobei die Zustandsvariable mindestens einen Stromwert und einen Spannungswert der Elektromagnete oder einen Stromwert und einen magnetischen Fluss der Elektromagnete enthält, wobei die Auswertedaten mindestens einen wahren Wert der Position der Welle enthalten, und
wobei die Lerneinheit als Steuerbedingung die Position der Welle lernt.

6. Maschinenlernvorrichtung nach Anspruch 1,

wobei die Zustandsvariable mindestens einen erkannten Wert der Position der Welle und einen Sollwert der Position der Welle enthält, und
wobei die Lerneinheit als die Steuerbedingung mindestens einen Spannungswert der Elektromagneten und einen Stromwert der Elektromagneten lernt.

7. Maschinenlernvorrichtung nach Anspruch 2 oder 3,
wobei die Aktualisierungseinheit die Lerneinheit veranlasst, ein weiteres Lernen durchzuführen, um einen Stromwert zum Antreiben des Magnetlagers kleiner oder gleich einem vorbestimmten zulässigen Wert zu machen.

8. Maschinenlernvorrichtung nach Anspruch 2 oder 3,

wobei die Auswertungsdaten ferner einen Parameter enthalten, der mit einer Temperatur eines Wechselrichters korreliert, der konfiguriert ist, das Magnetlager anzutreiben, und
wobei die Aktualisierungseinheit die Lerneinheit veranlasst, ein weiteres Lernen durchzuführen, um die Temperatur des Wechselrichters niedriger als oder gleich einem vorbestimmten zulässigen Wert zu machen.

9. Maschinenlernvorrichtung nach einem der Ansprüche 2, 3 und 6,

wobei die Zustandsvariable ferner einen erkannten Stromwert der Elektromagnete in einem Fall enthält, in dem das Magnetlager durch einen Spannungswechselrichter angetrieben wird, und
ferner einen erkannten Spannungswert der Elektromagnete in einem Fall enthält, in dem das Magnetlager durch einen Stromwechselrichter angetrieben wird.

10. Maschinenlernvorrichtung nach Anspruch 9,
wobei die Aktualisierungseinheit die Lerneinheit veranlasst, ein weiteres Lernen durchzuführen, um einen Wert zu verringern, der mit der Empfindlichkeit der Steuerung des Stromwertes korreliert.

11. Maschinenlernvorrichtung nach einem der Ansprüche 2, 3 und 6,
wobei die Zustandsvariable ferner eine Drehzahl der Welle enthält.

12. Maschinenlernvorrichtung nach einem der Ansprüche 2, 3 und 6,

wobei die Zustandsvariable ferner mindestens einen Parameter enthält, der mit einem Betriebszustand einer Kühlvorrichtung (100) korreliert,
wobei die Kühlvorrichtung einen Kältemittelkreislauf (190) aufweist, in dem ein Verdichter (110), ein Kondensator (120), ein Expansionsmechanismus (130) und ein Verdampfer (140) gekoppelt sind, und
wobei der Betriebszustand einen Bereich einer Kühlleistung der Kühlvorrichtung und einen Bereich einer Temperatur eines Mediums aufweist, das für einen Wärmeaustausch mit einem Kältemittel vorgesehen ist, das durch den Kältemittelkreislauf zirkuliert und in den Kondensator fließt.

13. Maschinenlernvorrichtung nach Anspruch 12,

wobei die Zustandsvariable ferner mindestens einen Parameter enthält, der mit der auf die Welle ausgeübten elektromagnetischen Kraft korreliert, und
wobei der Parameter, der mit der elektromagnetischen Kraft korreliert, mindestens einen Parameter, der mit einer Kältemittelbelastung der Kühlvorrichtung korreliert, und einen Parameter enthält, der mit einer physikalischen Eigenschaft der Kühlvorrichtung korreliert.

14. Maschinenlernvorrichtung nach Anspruch 12,

wobei die Zustandsvariable ferner mindestens einen Parameter enthält, der mit einer Eigenschaft des Magnetlagers korreliert, und
wobei der Parameter, der mit der Eigenschaft des Magnetlagers korreliert, mindestens einen Parameter, der mit einer Induktivität von Spulen der Elektromagneten korreliert, und einen Parameter enthält, der mit einem Widerstand der Spulen der Elektromagneten korreliert.

15. Maschinenlernvorrichtung nach Anspruch 2 oder 3,

wobei die Auswertungsdaten ferner einen Parameter enthalten, der mit der Stromverbrauch des Magnetlagers korreliert,
wobei die Aktualisierungseinheit die Lerneinheit veranlasst, weiteres Lernen durchzuführen, um den Stromverbrauch zu reduzieren, und
wobei der Parameter, der mit der Stromverbrauch des Magnetlagers korreliert, mindestens zwei eines Stromwerts zum Antreiben des Magnetlagers, eines Spannungswerts zum Antreiben des Magnetlagers und eines Widerstands von Spulen der Elektromagneten enthält.

16. Maschinenlernvorrichtung nach einem der Ansprüche 7, 8 und 15,

wobei die Zustandsvariable ferner mindestens einen Parameter enthält, der mit einem Betriebszustand einer Kühlvorrichtung (100) korreliert,

wobei die Kühlvorrichtung einen Kältemittelkreislauf (190) aufweist, in dem ein Verdichter (110), ein Kondensator (120), ein Expansionsmechanismus (130) und ein Verdampfer (140) gekoppelt sind, und

wobei der Betriebszustand einen Bereich einer Kühlleistung der Kühlvorrichtung und einen Bereich einer Temperatur eines Mediums aufweist, das für einen Wärmeaustausch mit einem Kältemittel dient, das durch den Kältemittelkreislauf zirkuliert und in den Kondensator strömt.

17. Maschinenlernvorrichtung nach einem der Ansprüche 2, 3 und 6,

wobei die Auswertungsdaten ferner mindestens einen Parameter enthalten, der mit der einem Verdichter (110) zugeführten Eingangsenergie korreliert, und

wobei die Aktualisierungseinheit die Lerneinheit veranlasst, weiteres Lernen durchzuführen, um die Eingangsenergie zu reduzieren.

18. Maschinenlernvorrichtung nach Anspruch 17,

wobei die Zustandsvariable ferner mindestens einen von mindestens einem Parameter, der mit einem Betriebszustand einer Kühlvorrichtung (100) korreliert, und mindestens einen Parameter enthält, der mit dem adiabatischen Wirkungsgrad eines mit der Welle gekoppelten Laufrads (113a) korreliert,

wobei die Kühlvorrichtung einen Kältemittelkreislauf (190) aufweist, in dem der Verdichter (110), ein Kondensator (120), ein Expansionsmechanismus (130) und ein Verdampfer (140) gekoppelt sind,

wobei die Betriebsbedingung einen Bereich einer Kühlleistung der Kühlvorrichtung und einen Bereich einer Temperatur eines Mediums aufweist, das für einen Wärmeaustausch mit einem Kältemittel dient, das durch den Kältemittelkreislauf zirkuliert und in den Kondensator strömt, und

wobei der Parameter, der mit dem adiabatischen Wirkungsgrad des Laufrads korreliert, mindestens einen Parameter, der mit einem Druck des Kältemittels korreliert, und einen Parameter enthält, der mit einer Temperatur des Kältemittels korreliert.

19. Maschinenlernvorrichtung nach Anspruch 2 oder 4,
wobei die Zustandsvariable ferner einen Parameter enthält, der mit einer Temperatur des Verschiebungssensors korreliert.

20. Maschinenlernvorrichtung nach einem der Ansprüche 1 bis 19, wobei die Aktualisierungseinheit basierend auf den Auswertungsdaten eine Belohnung berechnet, und

wobei die Lerneinheit ein Lernen unter Verwendung der Belohnung durchführt.

21. Maschinenlernvorrichtung nach einem der Ansprüche 1 bis 19,

wobei die Lerneinheit einen Parameter einer Funktion entsprechend der Ausgabe der Aktualisierungseinheit mehrfach ändert und für jede Funktion, deren Parameter geändert wird, die Steuerbedingung aus der Zustandsvariable ausgibt, wobei die Aktualisierungseinheit eine Akkumulationseinheit (47a) und eine Beurteilungseinheit (47b) aufweist,

wobei die Beurteilungseinheit die Auswertungsdaten beurteilt und ein Beurteilungsergebnis ausgibt,

wobei die Akkumulationseinheit basierend auf dem Beurteilungsergebnis Trainingsdaten aus der Zustandsvariable und den Auswertungsdaten erzeugt und die Trainingsdaten akkumuliert, und

wobei die Lerneinheit, basierend auf den in der Akkumulationseinheit akkumulierten Trainingsdaten, ein Lernen durchführt.

22. Maschinenlernvorrichtung nach einem der Ansprüche 1 bis 21, wobei die Lerneinheit basierend auf einem trainierten Modell, das als Ergebnis des Lernens erhalten wurde, die Steuerbedingung ausgibt.

23. Magnetlagereinrichtung, die die Maschinenlernvorrichtung nach Anspruch 22 aufweist.

**Revendications**

1. Dispositif d'apprentissage automatique prévu pour apprendre une condition de commande pour un dispositif de palier magnétique (10) comprenant un palier magnétique (21, 22) pourvu d'une pluralité d'électroaimants (51 à 54) prévus pour appliquer une force électromagnétique à un arbre (115), ledit dispositif d'apprentissage automatique comprenant :

une unité d'apprentissage (45) ;
une unité d'acquisition de variable d'état (43) prévue pour acquérir une variable d'état comprenant au moins un paramètre corrélé à une position de l'arbre ; et
une unité d'acquisition de données d'évaluation (44) prévue pour acquérir des données d'évaluation comprenant au moins un paramètre parmi une valeur mesurée de la position de l'arbre, une valeur de consigne de la position de l'arbre et un paramètre corrélé à un écart par rapport à la valeur de consigne,
**caractérisé en ce que** :

les données d'évaluation sont un écart d'une valeur détectée de la position de l'arbre par rapport à la valeur de consigne de la position de l'arbre ;
le dispositif d'apprentissage automatique comprend en outre une unité de mise à jour (47) prévue pour mettre à jour un état d'apprentissage de l'unité d'apprentissage au moyen des données d'évaluation ; et
l'unité d'apprentissage est prévue pour apprendre la condition de commande en fonction d'une sortie de l'unité de mise à jour.

2. Dispositif d'apprentissage automatique selon la revendication 1, où :

la variable d'état comprend au moins une valeur de sortie d'un capteur de déplacement (31, 32) prévu pour émettre un signal en fonction de la position de l'arbre ; et
l'unité d'apprentissage est prévue pour apprendre, en tant que condition de commande, une valeur de tension des électroaimants et/ou une valeur de courant des électroaimants.

3. Dispositif d'apprentissage automatique selon la revendication 1, où :

la variable d'état comprend au moins une valeur de courant et une valeur de tension des électroaimants ou une valeur de courant et un flux magnétique des électroaimants ; et
l'unité d'apprentissage est prévue pour apprendre, en tant que condition de commande, la valeur de tension des électroaimants et/ou la valeur de courant des électroaimants.

4. Dispositif d'apprentissage automatique selon la revendication 1, où :

la variable d'état comprend au moins une valeur de sortie d'un capteur de déplacement (31, 32) prévu pour émettre un signal en fonction de la position de l'arbre ;
les données d'évaluation comprennent au moins une valeur réelle de la position de l'arbre ; et
l'unité d'apprentissage est prévue pour apprendre, en tant que condition de commande, la position de l'arbre.

5. Dispositif d'apprentissage automatique selon la revendication 1,

où la variable d'état comprend au moins une valeur de courant et une valeur de tension des électroaimants ou une valeur de courant et un flux magnétique des électroaimants, où les données d'évaluation comprennent au moins une valeur réelle de la position de l'arbre, et
où l'unité d'apprentissage apprend, en tant que condition de commande, la position de l'arbre.

6. Dispositif d'apprentissage automatique selon la revendication 1,

où la variable d'état comprend au moins une valeur détectée de la position de l'arbre et une valeur de commande de la position de l'arbre, et
où l'unité d'apprentissage apprend, en tant que condition de commande, une valeur de tension des électroaimants et/ou une valeur de courant des électroaimants.

7. Dispositif d'apprentissage automatique selon la revendication 2 ou la revendication 3,
où l'unité de mise à jour entraîne l'unité d'apprentissage à poursuivre l'apprentissage de manière à rendre la valeur du courant d'entraînement du palier magnétique inférieure ou égale à une valeur admissible prédéterminée.

8. Dispositif d'apprentissage automatique selon la revendication 2 ou la revendication 3,

où les données d'évaluation comprennent en outre un paramètre corrélé à une température d'un onduleur prévu pour entraîner le palier magnétique, et
où l'unité de mise à jour entraîne l'unité d'apprentissage à poursuivre l'apprentissage de manière à rendre la température de l'onduleur inférieure ou égale à une valeur admissible prédéterminée.

9. Dispositif d'apprentissage automatique selon l'une des revendications 2, 3 et 6,

où la variable d'état
comprend en outre une valeur de courant détectée des électroaimants dans le cas où le palier magnétique est entraîné par un onduleur de type tension, et
comprend en outre une valeur de tension détectée des électroaimants dans le cas où le palier magnétique est entraîné par un onduleur de type courant.

10. Dispositif d'apprentissage automatique selon la revendication 9,
où l'unité de mise à jour entraîne l'unité d'apprentissage à poursuivre l'apprentissage afin de réduire une valeur corrélée à la réactivité de commande de la valeur de courant.

11. Dispositif d'apprentissage automatique selon l'une des revendications 2, 3 et 6,
où la variable d'état comprend en outre un nombre de rotations de l'arbre.

12. Dispositif d'apprentissage automatique selon l'une des revendications 2, 3 et 6, où la variable d'état comprend en outre au moins un paramètre corrélé à une condition de fonctionnement d'un appareil de réfrigération (100),

où l'appareil de réfrigération comprend un circuit de réfrigérant (190) reliant un compresseur (110), un condenseur (120), un mécanisme de détente (130) et un évaporateur (140), et
où la condition de fonctionnement comprend une plage de capacité de réfrigération de l'appareil de réfrigération et une plage de température d'un fluide pour l'échange de chaleur avec le réfrigérant circulant dans le circuit de réfrigérant et s'écoulant dans le condenseur.

13. Dispositif d'apprentissage automatique selon la revendication 12,

où la variable d'état comprend en outre au moins un paramètre corrélé à la force électromagnétique appliquée à l'arbre, et
où le paramètre corrélé à la force électromagnétique comprend un paramètre corrélé à une charge de réfrigérant de l'appareil de réfrigération et/ou un paramètre corrélé à une caractéristique physique de l'appareil de réfrigération.

14. Dispositif d'apprentissage automatique selon la revendication 12,

où la variable d'état comprend en outre au moins un paramètre corrélé à une caractéristique du palier magnétique, et
où le paramètre corrélé à la caractéristique du palier magnétique comprend un paramètre corrélé à une inductance des bobines des électroaimants et/ou un paramètre corrélé à une résistance des bobines des électroaimants.

15. Dispositif d'apprentissage automatique selon la revendication 2 ou la revendication 3,

où les données d'évaluation comprennent en outre un paramètre corrélé à la consommation d'énergie du palier magnétique,
où l'unité de mise à jour entraîne l'unité d'apprentissage à poursuivre l'apprentissage afin de réduire la consommation d'énergie, et
où le paramètre corrélé à la consommation d'énergie comprend au moins deux des valeurs suivantes : une valeur de courant pour l'entraînement du palier magnétique, une valeur de tension pour l'entraînement du palier magnétique et une résistance des bobines des électroaimants.

16. Dispositif d'apprentissage automatique selon l'une des revendications 7, 8 et 15,

où la variable d'état comprend en outre au moins un paramètre corrélé à une condition de fonctionnement d'un appareil de réfrigération (100),

où l'appareil de réfrigération comprend un circuit de réfrigérant (190) reliant un compresseur (110), un condenseur (120), un mécanisme de détente (130) et un évaporateur (140), et

où la condition de fonctionnement comprend une plage de capacité de réfrigération de l'appareil de réfrigération et une plage de température d'un fluide pour l'échange de chaleur avec le réfrigérant circulant dans le circuit de réfrigérant et s'écoulant dans le condenseur.

17. Dispositif d'apprentissage automatique selon l'une des revendications 2, 3 et 6,

où les données d'évaluation comprennent en outre au moins un paramètre corrélé à l'énergie d'entrée alimentant un compresseur (110), et

où l'unité de mise à jour entraîne l'unité d'apprentissage à poursuivre l'apprentissage afin de réduire l'énergie d'entrée.

18. Dispositif d'apprentissage automatique selon la revendication 17,

où la variable d'état comprend en outre au moins un paramètre corrélé à une condition de fonctionnement d'un appareil de réfrigération (100) et/ou au moins un paramètre corrélé à l'efficacité adiabatique d'une roue (113a) couplée à l'arbre,

où l'appareil de réfrigération comprend un circuit de réfrigérant (190) reliant le compresseur (110), un condenseur (120), un mécanisme de détente (130) et un évaporateur (140),

où la condition de fonctionnement comprend une plage de capacité de réfrigération de l'appareil de réfrigération et une plage de température d'un fluide pour l'échange de chaleur avec le réfrigérant circulant dans le circuit de réfrigérant et s'écoulant dans le condenseur, et

où le paramètre corrélé à l'efficacité adiabatique de la roue comprend un paramètre corrélé à la pression du réfrigérant et/ou un paramètre corrélé à la température du réfrigérant.

19. Dispositif d'apprentissage automatique selon la revendication 2 ou la revendication 4,

où la variable d'état comprend en outre un paramètre corrélé à la température du capteur de déplacement.

20. Dispositif d'apprentissage automatique selon l'une des revendications 1 à 19,

où l'unité de mise à jour calcule une prime, sur la base des données d'évaluation, et

où l'unité d'apprentissage effectue l'apprentissage au moyen de la prime.

21. Dispositif d'apprentissage automatique selon l'une des revendications 1 à 19,

où l'unité d'apprentissage modifie plusieurs fois un paramètre d'une fonction en fonction de la sortie de l'unité de mise à jour et émet, pour chaque fonction dont le paramètre est modifié, la condition de commande à partir de la variable d'état,

où l'unité de mise à jour comprend une unité d'accumulation (47a) et une unité d'évaluation (47b),

où l'unité d'évaluation évalue les données d'évaluation et émet un résultat d'évaluation,

où l'unité d'accumulation crée, sur la base du résultat d'évaluation, des données d'entraînement à partir de la variable d'état et des données d'évaluation, et accumule les données d'apprentissage, et

où l'unité d'apprentissage effectue l'apprentissage sur la base des données d'apprentissage accumulées dans l'unité d'accumulation.

22. Dispositif d'apprentissage automatique selon l'une des revendications 1 à 21,

où l'unité d'apprentissage émet la condition de commande sur la base d'un modèle entraîné obtenu comme résultat d'apprentissage.

23. Dispositif de palier magnétique, comprenant le dispositif d'apprentissage automatique selon la revendication 22.

EP 3 940 254 B1

FIG. 1

FIG. 2

EP 3 940 254 B1

FIG. 3

FIG. 4

FIG. 5

EP 3 940 254 B1

FIG. 6

FIG. 7

EP 3 940 254 B1

FIG. 8

FIG. 9A

EP 3 940 254 B1

FIG. 9B

FIG. 10

EP 3 940 254 B1

FIG. 11

FIG. 12

FIG. 13

EP 3 940 254 B1

FIG. 14

FIG. 15

FIG. 16

EP 3 940 254 B1

FIG. 17

EP 3 940 254 B1

FIG. 18

FIG. 19

EP 3 940 254 B1

CONDENSER INLET WATER
TEMPERATURE (°F)

AIR CONDITIONER REFRIGERATING
CAPACITY (REFRIGERATING TON)

FIG. 20

## REFERENCES CITED IN THE DESCRIPTION

**Patent documents cited in the description**

- JP H04040308 U

- JP 2001165163 A